(19) Europäisches Patentamt / European Patent Office / Office européen des brevets

(11) **EP 4 746 364 A1**

(12) **EUROPEAN PATENT APPLICATION**
published in accordance with Art. 153(4) EPC

(43) Date of publication:
**20.05.2026 Bulletin 2026/21**

(21) Application number: **23944633.9**

(22) Date of filing: **10.07.2023**

(51) International Patent Classification (IPC):
**_H04L 41/16_** _(2022.01)_

(52) Cooperative Patent Classification (CPC):
**H04L 5/00; H04L 41/16**

(86) International application number:
**PCT/CN2023/106668**

(87) International publication number:
**WO 2025/010610 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **LIU, Zhengxuan
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **MODEL SELECTION METHOD, TERMINAL DEVICE, AND NETWORK DEVICE**

(57)    Disclosed in the embodiments of the present disclosure are a model selection method, a terminal device, and a network device. The method comprises: receiving network configuration information and/or first indication information from a network device, wherein the network configuration information and/or the first indication information is used for a terminal device to select a channel status information (CSI) generation part model; or sending second indication information to the network device, wherein the second indication information is used for the network device to select a CSI recovery part model. Thus, a matching relationship between a model selected by a terminal device and a model selected by a network device is determined by means of low signaling overheads, thereby ensuring the performance of compression and feedback of CSI.

Receiving network configuration information and/or first indication information from a network device, the network configuration information and/or the first indication information being used for the terminal device to select a CSI generation part model; or transmitting second indication information to the network device, the second indication information being used for the network device to select a CSI recovery part model — S5101

FIG. 5A

EP 4 746 364 A1

**Description**

**FIELD**

The present disclosure relates to the field of communication technology, and in particular to a model selection method, a terminal device, and a network device.

**BACKGROUND**

Currently, in the 3GPP (3rd Generation Partnership Project) standardization research, bilateral AI (Artificial Intelligence)/ML (Machine Learning) models based on a terminal side CSI (Channel Status Information) generation part model and a network side CSI recovery part model are developed to implement CSI compression feedback and recovery, respectively. If the model selected by the terminal device does not match the model selected by the network device, the CSI feedback performance based on the bilateral AI/ML models will be significantly degraded.

**SUMMARY**

Embodiments of the present disclosure provide a model selection method, a terminal device, and a network device, which may solve a problem of how to determine a matching relationship between a model selected by the terminal device and a model selected by the network device with less signaling overhead existing in the related art.

According to a first aspect of embodiments of the present disclosure, a model selection method is provided. The method is performed by a terminal device and includes: receiving network configuration information and/or first indication information from a network device, the network configuration information and/or the first indication information being used for the terminal device to select a channel state information (CSI) generation part model; or transmitting second indication information to a network device, the second indication information being used for the network device to select a CSI recovery part model.

According to a second aspect of embodiments of the present disclosure, a model selection method is provided. The method is performed by a network device and includes: transmitting network configuration information and/or first indication information to a terminal device, the network configuration information and/or the first indication information being used for the terminal device to select a channel state information (CSI) generation part model and used for the network device to select a CSI recovery part model; or receiving second indication information from a terminal device, the second indication information being used for the network device to select a CSI recovery part model.

According to a third aspect of embodiments of the present disclosure, a model selection method is provided, including: receiving, by a terminal device, network configuration information and/or first indication information from a network device, the network configuration information and/or the first indication information being used for the terminal device to select a channel state information (CSI) generation part model; or transmitting, by a terminal device, second indication information to a network device, the second indication information being used for the network device to select a CSI recovery part model.

According to a fourth aspect of embodiments of the present disclosure, a model selection apparatus is provided, including: a transceiver module configured to receive network configuration information and/or first indication information from a network device, the network configuration information and/or the first indication information being used for a terminal device to select a channel state information (CSI) generation part model; or configured to transmit second indication information to a network device, the second indication information being used for the network device to select a CSI recovery part model.

According to a fifth aspect of embodiments of the present disclosure, a model selection apparatus is provided, including: a transceiver module configured to transmit network configuration information and/or first indication information to a terminal device, the network configuration information and/or the first indication information being used for the terminal device to select a channel state information (CSI) generation part model and used for a network device to select a CSI recovery part model; or configured to receive second indication information from a terminal device, the second indication information being used for a network device to select a CSI recovery part model.

According to a sixth aspect of embodiments of the present disclosure, a terminal device is provided. The terminal device includes one or more processors, in which the one or more processor are configured to invoke instructions to cause the terminal device to perform the model selection method as described in the first aspect.

According to a seventh aspect of embodiments of the present disclosure, a network device is provided. The network device includes one or more processors, in which the one or more processor are configured to invoke instructions to cause the network device to perform the model selection method as described in the second aspect.

According to an eighth aspect of embodiments of the present disclosure, a communication system is provided. The communication system includes a terminal configured to implement the model selection method as described in the first aspect and a network device configured to implement the model selection method as described in the second aspect.

According to a ninth aspect of embodiments of the present disclosure, a storage medium is provided. The storage medium stores instructions that, when the instructions are executed on a communication device, cause the communication device to perform the model selection method as described in the first aspect and the second aspect.

According to the solution proposed by embodiments of the present disclosure, the matching relationship between the model selected by the terminal device and the model selected by the network device may be determined with less signaling overhead, and the performance of CSI compression feedback may be ensured.

## BRIEF DESCRIPTION OF THE DRAWINGS

In order to more clearly illustrate the technical solutions in embodiments or background art of the present disclosure, the accompanying drawings to be used in the embodiments or background art of the present disclosure will be described below.

FIG. 1A is a schematic diagram of an architecture of a communication system according to an embodiment of the present disclosure.

FIG. 1B is a schematic diagram of implementing CSI compression feedback and recovery based on a bilateral AI/ML model.

FIG. 2 is an interactive schematic diagram of a model selection method according to an embodiment of the present disclosure.

FIG. 3A is an interactive schematic diagram of a model selection method according to an embodiment of the present disclosure.

FIG. 3B is an interactive schematic diagram of a model selection method according to an embodiment of the present disclosure.

FIG. 3C is an interactive schematic diagram of a model selection method according to an embodiment of the present disclosure.

FIG. 4A is an interactive schematic diagram of a model selection method according to an embodiment of the present disclosure.

FIG. 4B is an interactive schematic diagram of a model selection method according to an embodiment of the present disclosure.

FIG. 4C is an interactive schematic diagram of a model selection method according to an embodiment of the present disclosure.

FIG. 5A is an interactive schematic diagram of a model selection method according to an embodiment of the present disclosure.

FIG. 5B is an interactive schematic diagram of a model selection method according to an embodiment of the present disclosure.

FIG. 6A is a block diagram of a terminal 6100 provided by an embodiment of the present disclosure.

FIG. 6B is a block diagram of a network device 6200 provided by an embodiment of the present disclosure.

FIG. 7A is a block diagram of a communication device 7100 provided by an embodiment of the present disclosure.

FIG. 7B is a block diagram of a chip 7200 provided by an embodiment of the present disclosure.

## DETAILED DESCRIPTION

Embodiments of the present disclosure provide a model selection method, a terminal device, and a network device.

In a first aspect, embodiments of the present disclosure provide a model selection method, which is performed by a terminal device and includes:

receiving network configuration information and/or first indication information from a network device, the network configuration information and/or the first indication information being used for the terminal device to select a channel state information (CSI) generation part model; or transmitting second indication information to a network device, the second indication information being used for the network device to select a CSI recovery part model.

In the above embodiments, since the terminal device may select the CSI generation part model according to the network configuration information and/or the first indication information, or transmit the second indication information for the network device to select the CSI recovery part model so that the network device may select the CSI recovery part model based on the second indication information, and the network configuration information, the first indication information, and the second indication information only need to be transmitted once in a process of selecting a matching model, effectively reducing signaling overhead, realizing determination of the matching relationship between the model selected by the terminal device and the model selected by the network device with less signaling overhead, and ensuring the performance of CSI compression feedback.

In conjunction with some embodiments of the first aspect, in some embodiments, the network configuration information includes at least one of:

a CSI feedback payload size, in which the CSI feedback payload size is an output information length of the CSI generation part model;
a codebook type and/or a codebook parameter; or
a CSI reporting parameter.

In the above embodiments, the terminal device may determine a CSI generation part model that matches the CSI recovery part model selected by the network device based on one or more of the CSI feedback payload size, the codebook type and/or the codebook parameter, and the CSI reporting parameter. The CSI feedback payload size may be an output information length of the CSI generation part model. Optionally, the output information length may be a quantized size of the codeword output by the CSI generation part model.

In conjunction with some embodiments of the first aspect, in some embodiments, the CSI feedback payload size has a correspondence with a rank of a selected CSI generation part model; or

the CSI feedback payload size has a correspondence with a transmission layer of a selected CSI generation part model; or
the CSI feedback payload size has a correspondence with a rank and a transmission layer of a selected CSI generation part model.

In the above embodiments, the CSI feedback payload size corresponds to the rank of the selected CSI generation part model, or to the transmission layer of the selected CSI generation part model, or to both the rank and the transmission layer of the selected CSI generation part model.

In conjunction with some embodiments of the first aspect, in some embodiments, the CSI reporting parameter includes at least one of:

a transmission bandwidth size;
a number of subbands;
a carrier; or
a number of antenna ports.

In the above embodiments, the terminal device may determine a CSI generation part model that matches the CSI recovery part model selected by the network device based on one or more of the transmission bandwidth size, the number of subbands, the carrier, and the number of antenna ports.

In conjunction with some embodiments of the first aspect, in some embodiments, the first indication information includes at least one of:

model indication information for the CSI generation part model;
model indication information for the CSI recovery part model;
indication information for an input data type of the CSI generation part model;
indication information for an output quantization approach of the CSI generation part model;
indication information for a training approach of the CSI generation part model; or
indication information for a training approach of the CSI recovery part model.

In the above embodiments, the terminal device may determine the CSI generation part model that matches the CSI recovery part model selected by the network device based on one or more of the model indication information for the CSI generation part model, the model indication information for the CSI recovery part model, the indication information for the input data type of the CSI generation part model, the indication information for the output quantization approach of the CSI generation part model, the indication information for the training approach of the CSI generation part model, and the indication information for the training approach of the CSI recovery part model.

In conjunction with some embodiments of the first aspect, the method further includes:
transmitting model indication information for a selected CSI generation part model to the network device, in which the first indication information does not include the model indication information.

In the above embodiments, in a case where the first indication information does not include the model indication information, the terminal device may further transmit the model indication information for the selected CSI generation part model to the network device, so that the network device determines a matching CSI recovery part model based on the model indication information.

In conjunction with some embodiments of the first aspect, in some embodiments, the second indication information includes at least one of:

model indication information for the CSI generation part model;
model indication information for the CSI recovery part model;
indication information for a training approach of the CSI generation part model; or
indication information for a training approach of the CSI recovery part model.

In the above embodiments, the second indication information transmitted by the terminal device to the network device may be at least one of the model indication information for the CSI generation part model, the model indication information for the CSI recovery part model, the indication information for the training approach of the CSI generation part model, and the indication information for the training approach of the CSI recovery part model.

In conjunction with some embodiments of the first aspect, in some embodiments, the model indication information for the CSI generation part model is indicated by $\lceil \log_2^{N_1} \rceil$ bits, in which $N_1$ is a number of CSI generation part models deployed by the terminal device; and/or

the model indication information for the CSI recovery part model is indicated by $\lceil \log_2^{N_2} \rceil$ bits, in which $N_2$ is a number of CSI recovery part models deployed by the network device.

In the above embodiments, the terminal device may indicate the model indication information for the CSI generation part model by $\lceil \log_2^{N_1} \rceil$ bits, in which $N_1$ is the number of the CSI generation part models deployed by the terminal device, and/or indicate the model indication information for the CSI recovery part model by $\lceil \log_2^{N_2} \rceil$ bits, in which $N_2$ is the number of the CSI recovery part models deployed by the network device. It should be noted that the values of $N_1$ and $N_2$ may be the same or different.

In conjunction with some embodiments of the first aspect, in some embodiments, the model indication information for an i-th transmission layer of the CSI generation part model is indicated by $\lceil \log_2^{Mi_1} \rceil$ bits, in which $Mi_1$ is a number of CSI generation part models deployed by the terminal device on the i-th transmission layer; and/or

the model indication information for an i-th transmission layer of the CSI recovery part model is indicated by $\lceil \log_2^{Mi_2} \rceil$ bits, in which $Mi_2$ is a number of CSI recovery part models deployed by the network device on the i-th transmission layer;
in which a training approach of the CSI generation part model and/or a training approach of the CSI recovery part model indicates that different CSI generation part models and different CSI recovery part models are trained for different transmission layers.

In the above embodiments, in a case where the training approach of the CSI generation part model and/or the training approach of the CSI recovery part model indicates that different CSI generation part models and different CSI recovery part models are trained for different transmission layers, the terminal device may indicate the model indication information for the i-th transmission layer of the CSI generation part model by $\lceil \log_2^{Mi_1} \rceil$ bits, in which $Mi_1$ is the number of CSI generation part models deployed by the terminal device on the i-th transmission layer, and/or indicate the model indication information for the i-th transmission layer of the CSI recovery part model by $\lceil \log_2^{Mi_2} \rceil$ bits, in which $Mi_2$ is the number of CSI recovery part models deployed by the network device. It should be noted that the values of $Mi_1$ and $Mi_2$ may be the same or different.

In conjunction with some embodiments of the first aspect, in some embodiments, indication information for a training approach of the CSI generation part model is indicated by $\lceil \log_2^{K_1} \rceil$ bits, in which $K_1$ is a number of training approaches employed by the terminal device; and/or

indication information for a training approach of the CSI recovery part model is indicated by $\left\lceil \log_2^{K_2} \right\rceil$ bits, in which $K_2$ is a number of training approaches employed by the network device.

In the above embodiments, the terminal device may indicate the indication information for the training approach of the CSI generation part model by $\left\lceil \log_2^{K_1} \right\rceil$ bits, in which $K_1$ is the number of training approaches employed by the terminal device, and/or indicate the indication information for the training approach of the CSI recovery part model by $\left\lceil \log_2^{K_2} \right\rceil$ bits, in which $K_2$ is the number of training approaches employed by the network device. It should be noted that the values of $K_1$ and $K_2$ may be the same or different.

In conjunction with some embodiments of the first aspect, in some embodiments, the model indication information for the CSI generation part model and/or the indication information for the training approach of the CSI generation part model is carried in at least one of:

CSI Part1;
CSI Part2; or
a radio resource control (RRC) message.

In the above embodiments, the model indication information for the CSI generation part model and/or the indication information for the training approach of the CSI generation part model may be carried in at least one of the CSI part1, the CSI part2, and the RRC message and transmitted to the network device.

In conjunction with some embodiments of the first aspect, in some embodiments, the second indication information includes indication information for a training approach of the CSI generation part model and/or indication information for a training approach of the CSI recovery part model; and
the second indication information further includes indication information that whether the CSI feedback payload size output by the CSI generation part model is variable.

In the above embodiments, in a case where the second indication information includes the indication information for the training approach of the CSI generation part model and/or the indication information for the training approach of the CSI recovery part model, the terminal device may include the indication information that whether the CSI feedback payload size output by the CSI generation part model is variable in the second indication information and transmit it to the network device, so that the network device may select whether the input information length is variable for the CSI generation part model according to the received indication information.

In a second aspect, embodiments of the present application provide a model selection method, which is performed by a network device and includes:
transmitting network configuration information and/or first indication information to a terminal device, the network configuration information and/or the first indication information being used for the terminal device to select a channel state information (CSI) generation part model and used for the network device to select a CSI recovery part model; or
receiving second indication information from a terminal device, the second indication information being used for the network device to select a CSI recovery part model.

In the above embodiments, since the network device may select the CSI recovery part model according to the network configuration information and/or the second indication information, or transmit the network configuration information and/or the first indication information for the terminal device to select the CSI generation part model so that the terminal device may select the CSI generation part model based on the network configuration information and/or the first indication information, and the network configuration information, the first indication information, and the second indication information only need to be transmitted once in a process of selecting a matching model, effectively reducing signaling overhead, realizing determination of the matching relationship between the model selected by the terminal device and the model selected by the network device with less signaling overhead, and ensuring the performance of CSI compression feedback.

In conjunction with some embodiments of the second aspect, in some embodiments, the network configuration information includes at least one of:

a CSI feedback payload size, in which the CSI feedback payload size is an output information length of the CSI generation part model;
a codebook type and/or a codebook parameter; or
a CSI reporting parameter.

In conjunction with some embodiments of the second aspect, in some embodiments, the CSI feedback payload size has a correspondence with a rank of a selected CSI generation part model; or

the CSI feedback payload size has a correspondence with a transmission layer of a selected CSI generation part model; or

the CSI feedback payload size has a correspondence with a rank and a transmission layer of a selected CSI generation part model.

In conjunction with some embodiments of the second aspect, in some embodiments, the CSI reporting parameter includes at least one of:

a transmission bandwidth size;
a number of subbands;
a carrier; or
a number of antenna ports.

In conjunction with some embodiments of the second aspect, in some embodiments, the first indication information includes at least one of:

model indication information for the CSI generation part model;
model indication information for the CSI recovery part model;
indication information for an input data type of the CSI generation part model;
indication information for an output quantization approach of the CSI generation part model;
indication information for a training approach of the CSI generation part model; or
indication information for a training approach of the CSI recovery part model.

In conjunction with some embodiments of the second aspect, in some embodiments, the method further includes: receiving model indication information for a selected CSI generation part model from the terminal device, in which the first indication information does not include the model indication information.

In conjunction with some embodiments of the second aspect, in some embodiments, the second indication information includes at least one of:

model indication information for the CSI generation part model;
model indication information for the CSI recovery part model;
indication information for a training approach of the CSI generation part model; or
indication information for a training approach of the CSI recovery part model.

In conjunction with some embodiments of the second aspect, in some embodiments, the model indication information for the CSI generation part model is indicated by $\left\lceil \log_2^{N_1} \right\rceil$ bits, in which $N_1$ is a number of CSI generation part models deployed by the terminal device; and/or

the model indication information for the CSI recovery part model is indicated by $\left\lceil \log_2^{N_2} \right\rceil$ bits, in which $N_2$ is a number of CSI recovery part models deployed by the network device.

In conjunction with some embodiments of the second aspect, in some embodiments, model indication information for an i-th transmission layer of the CSI generation part model is indicated by $\left\lceil \log_2^{Mi_1} \right\rceil$ bits, in which $Mi_1$ is a number of CSI generation part models deployed by the terminal device on the i-th transmission layer; and/or

the model indication information for an i-th transmission layer of the CSI recovery part model is indicated by $\left\lceil \log_2^{Mi_2} \right\rceil$ bits, in which $Mi_2$ is a number of CSI recovery part models deployed by the network device on the i-th transmission layer;

in which a training approach of the CSI generation part model and/or a training approach of the CSI recovery part model indicates that different CSI generation part models and different CSI recovery part models are trained for different transmission layers.

In conjunction with some embodiments of the second aspect, in some embodiments, indication information for a training approach of the CSI generation part model is indicated by $\left\lceil \log_2^{K_1} \right\rceil$ bits, in which $K_1$ is a number of training approaches employed by the terminal device; and/or

indication information for a training approach of the CSI recovery part model is indicated by $\left\lceil \log_2^{K_2} \right\rceil$ bits, in which $K_2$ is a number of training approaches employed by the network device.

In conjunction with some embodiments of the second aspect, in some embodiments, the model indication information for the CSI generation part model and/or the indication information for the training approach of the CSI generation part model is carried in at least one of:

CSI Part1;
CSI Part2; or
a radio resource control (RRC) message.

In conjunction with some embodiments of the second aspect, in some embodiments, the second indication information includes indication information for a training approach of the CSI generation part model and/or indication information for a training approach of the CSI recovery part model; and
the second indication information further includes indication information that whether the CSI feedback payload size output by the CSI generation part model is variable.

In a third aspect, embodiments of the present disclosure provide a model selection method, and the method includes:
receiving, by a terminal device, network configuration information and/or first indication information from a network device, the network configuration information and/or the first indication information being used for the terminal device to select a channel state information (CSI) generation part model; or transmitting, by a terminal device, second indication information to a network device, the second indication information being used for the network device to select a CSI recovery part model.

In the above embodiments, since the terminal device may select the CSI generation part model according to the network configuration information and/or the first indication information, in which the network configuration information and/or the first indication information transmitted by the network device to the terminal device may be used for the terminal device to select the CSI generation part model; correspondingly, the network device may select the CSI generation part model according to the network configuration information and/or the second indication information, in which the second indication information is transmitted by the terminal device to the network device, and may be used for the network device to select the CSI recovery part model. Furthermore, the network configuration information, the first indication information, and the second indication information only need to be transmitted once in a process of selecting a matching model, effectively reducing signaling overhead, realizing determination of the matching relationship between the model selected by the terminal device and the model selected by the network device with less signaling overhead, and ensuring the performance of CSI compression feedback.

In a fourth aspect, embodiments of the present disclosure provide a first model selection apparatus, and the apparatus includes:
a transceiver module configured to receive network configuration information and/or first indication information from a network device, the network configuration information and/or the first indication information being used for the terminal device to select a channel state information (CSI) generation part model; or configured to transmit second indication information to a network device, the second indication information being used for the network device to select a CSI recovery part model.

In a fifth aspect, embodiments of the present disclosure provide a second model selection apparatus, and the apparatus includes:
a transceiver module configured to transmit network configuration information and/or first indication information to a terminal device, the network configuration information and/or the first indication information being used for the terminal device to select a channel state information (CSI) generation part model and used for the network device to select a CSI recovery part model; or configured to receive second indication information from a terminal device, the second indication information being used for a network device to select a CSI recovery part model.

In a sixth aspect, embodiments of the present disclosure provide a terminal device. The terminal device includes: one or more processors, in which the one or more processors are configured to invoke instructions to cause the terminal device to perform the model selection method as described in the first aspect or optional implementations of the first aspect.

In a seventh aspect, embodiments of the present disclosure provide a network device. The network device includes: one or more processors, in which the one or more processors are configured to invoke instructions to cause the network device to perform the model selection method as described in the second aspect or optional implementations of the second aspect.

In an eighth aspect, embodiments of the present disclosure provide a communication system including a terminal device configured to perform the model selection method as described in the first aspect or optional implementations of the first aspect; and a network device configured to perform the model selection method as described in the second aspect or optional implementations of the second aspect.

In a ninth aspect, embodiments of the present disclosure provide a storage medium storing instructions that, when executed on a communication device, cause the communication device to perform the model selection method as described in the first aspect and the second aspect, or optional implementations of the first aspect and the second aspect.

In a tenth aspect, embodiments of the present disclosure provide a program product that, when executed by a terminal device or a network device, causes the terminal device to perform a model selection method as described in the first aspect or optional implementations of the first aspect, or causes the network device to perform the a model selection method as described in the second aspect or optional implementations of the second aspect.

In an eleventh aspect, embodiments of the present disclosure provide a computer program that, when executed on a computer, causes the computer to perform a model selection method as described in the first aspect and the second aspect, or the optional implementations of the first aspect and the second aspect.

It may be understood that the first model selection apparatus, the second model selection apparatus, the terminal device, the network device, the communication system, the storage medium, the program product, and the computer program described above are all used to perform the method provided by embodiments of the present disclosure. Therefore, the beneficial effects that may be achieved can refer to the beneficial effects in the corresponding methods, which are not repeated here.

Embodiments of the present disclosure provide a model selection method, a terminal device, and a network device. In some embodiments, terms such as the model selection method, the information processing method, and the communication method may be interchanged with each other, terms such as the model selection apparatus, the information processing apparatus, and the communication apparatus may be interchanged with each other, and terms such as the information processing system, and the communication system may be interchanged with each other.

The embodiments of the present disclosure are not exhaustive, but are merely illustrative of some embodiments, and are not intended to be a specific limitation on the scope of protection of the present disclosure. Unless there is no contradiction, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and in addition, optional implementations in a certain embodiment may be arbitrarily combined. In addition, various embodiments may be arbitrarily combined, for example, some or all steps of different embodiments may be arbitrarily combined, and one embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are only for purpose of description of particular embodiments, and are not intended to limit embodiments of the present disclosure.

In embodiments of the present disclosure, unless otherwise specified, an element represented in the singular form, such as "a", "an", "the", "above-mentioned", "said", "aforementioned", "this", and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, the term "plurality of" refers to two or more than two.

In some embodiments, terms such as "at least one of," "one or more," "a plurality of," and "multiple" may be interchanged with each other.

In some embodiments, descriptions such as "at least one of A and B", "A and/or B", "A in one case, B in another case", "in response to one case A, in response to another case B", etc. may include the following technical solutions according to circumstances: in some embodiments, A (performing A independently of B); in some embodiments, B (performing B independently of A); in some embodiments, select from A and B for performing (A and B are selectively performed); in some embodiments, A and B (both A and B are performed). It is similar to the above when there are more branches, such as A, B, C, etc.

In some embodiments, descriptions such as "A or B" may include the following technical solutions according to circumstances: in some embodiments, A (performing A independently of B); in some embodiments, B (performing B independently of A); in some embodiments, select from A and B for performing (A and B are selectively performed). It is similar to the above when there are more branches, such as A, B, C, etc.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. In addition, objects modified by different prefixes may be the same or different, for example, if the description object is "device", the "first device" and the "second device" may be the same device or different devices, and the types may be the same or different. For another example, when the description object is "information", the "first information" and the "second information" may be the same information or different information, and the contents may be the same or different.

In some embodiments, "including A," "comprising A," "for indicating A," "carrying A," may be interpreted as directly carrying A, or may be interpreted as indirectly indicating A.

In some embodiments, terms such as "in response to," "in response to determining," "in a case where," "upon," "when," "if," "in case," and the like may be interchanged with each other.

In some embodiments, terms such as "greater than", "greater than or equal to", "not smaller than", "more than", "more than or equal to", "not less than", "higher than", "higher than or equal to", "not lower than", "above" and the like may be interchanged with each other, and terms such as "smaller than", "smaller than or equal to", "not greater than", "less than", "less than or equal to", "not more than", "lower than", "lower than or equal to", "not higher than", "below" and the like may be interchanged with each other.

In some embodiments, a device or the like may be interpreted as either physical or virtual, and the name thereof is not limited to the name described in the embodiments, and terms such as "apparatus", "equipment", "device", "circuit", "network element", "node", "function", "unit", "section", "system", "network", "chip", "chip system", "entity", and "body" may be interchanged with each other.

In some embodiments, a "network" may be interpreted as an apparatus (e.g., an access network device, a core network device, etc.) included in the network.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be interchanged with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc. may be interchanged with each other.

In some embodiments, an access network device, a core network device, or a network device may be interchanged with a terminal. For example, each embodiment of the present disclosure may be applied to a configuration in which communication between an access network device, a core network device, or a network device and a terminal is interchanged with communication between a plurality of terminals (for example, a device-to-device (D2D), a vehicle-to-everything (V2X), or the like). In this case, the terminal may have all or a part of the functions of the access network device. Further, terms such as "uplink" and "downlink" may be interchanged with terms corresponding to inter-terminal communication (for example "side"). For example, an uplink channel, a downlink channel, or the like may be interchanged with a sidelink channel, and an uplink, a downlink, or the like may be interchanged with a sidelink.

In some embodiments, the terminal may be interchanged with an access network device, a core network device, or a network device. In this case, the access network device, the core network device, or the network device may have all or a part of the functions of the terminal.

In some embodiments, the acquisition of data, information, etc. may comply with laws and regulations of the country where it is located.

In some embodiments, data, information, etc. may be obtained after acquiring the user's consent.

In addition, each element, each row, or each column in the table of embodiments of the present disclosure may be implemented as an independent embodiment, and any combination of any element, any row, or any column may also be implemented as an independent embodiment.

In order to better understand a model selection method disclosed by embodiments of the present disclosure, a communication system to which embodiments of the present disclosure apply is first described below.

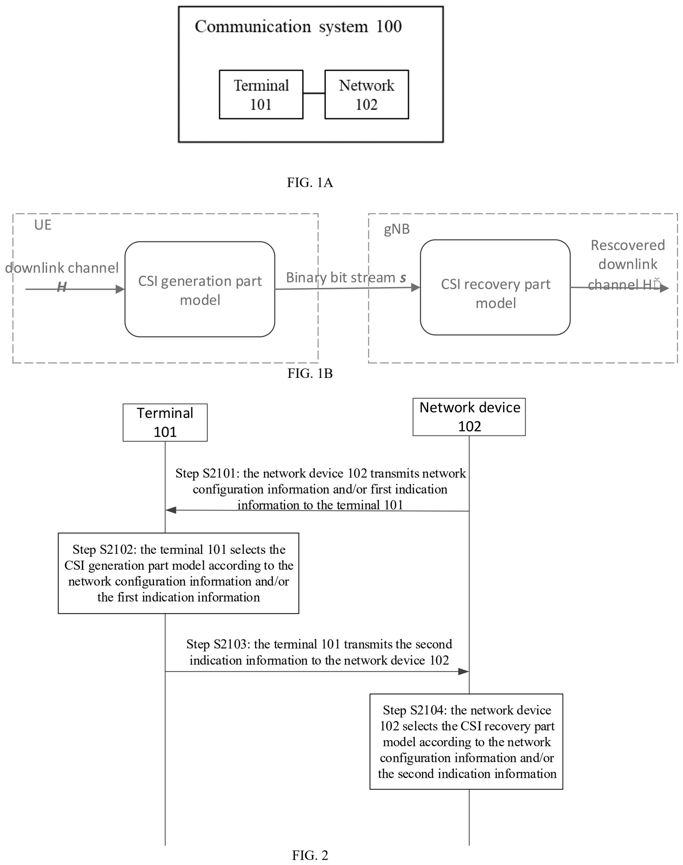

FIG. 1A is a schematic diagram of an architecture of a communication system according to an embodiment of the present disclosure.

As illustrated in FIG. 1A, the communication system 100 includes a terminal 101, and a network device 102.

In some embodiments, the terminal 101 includes, for example, at least one of a mobile phone, a wearable device, an Internet of Things device, an automobile with a communication function, a smart car, a tablet computer, a computer with a wireless transmission and reception function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, and a wireless terminal device in a smart home, which is not limited to this.

In some embodiments, the network device 102 is, for example, a node or device that accesses a terminal to a wireless network, and the network device may include an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center in a 5G communication system, a base station, an open base station (RAN), a cloud base station (Cloud RAN) in a 6G communication system, a base station in other communication systems, and an access node in a Wi-Fi system, which is not limited to this.

In some embodiments, the technical solution of the present disclosure may be applied to an Open RAN architecture, and at this time, interfaces between network devices or within network devices according to embodiments of the present disclosure may be changed to internal interfaces of the Open RAN, and flow and information interaction between these internal interfaces may be realized by software or a program. In some embodiments, the network device may be composed of a central unit (CU) and a distributed unit (DU), in which the CU may also be referred to as a control unit, and the protocol layer of the network device may be separated by adopting the structure of the CU-DU, some functions of the protocol layer are centrally controlled by the CU, and some or all functions of the remaining protocol layer are distributed in the DU, and the DU is centrally controlled by the CU, which is not limited to this.

It is to be understood that the communication system described in embodiments of the present disclosure is intended to more clearly illustrate the technical solutions of embodiments of the present disclosure and does not constitute a limitation of the technical solutions provided by embodiments of the present disclosure, and a person of ordinary skill in the art may know that, with the evolution of the system architecture and the emergence of new business scenarios, the technical solutions provided by embodiments of the present disclosure are equally applicable to similar technical problems.

The following embodiments of the present disclosure may be applied to the communication system 100 illustrated in FIG. 1A or a part of the main body, which is not limited to this. Each body illustrated in FIG. 1A is an example; the communication system may include all or some of the bodies in FIG. 1A, or other bodies other than FIG. 1A, the number and form of the bodies are arbitrary, the bodies may be physical or virtual, the connection relationship between the bodies is an example, the bodies may not be connected or connected, and the connection may be any form, including direct connection or indirect connection, wired connection or wireless connection.

Each embodiment of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new Radio (NR), future radio access (FRA), new-radio access technology (RAT), new radio (NR), new radio access (NX), future generation radio access (FX), global system for mobile communications (GSM (registered trademark) ), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine to machine (M2M) system, Internet of Things (IoT) system, vehicle-to-everything (V2X) system, systems using other communication methods, next generation systems extended based on them, and the like. In addition, a plurality of systems may be applied in combination (for example, a combination of LTE or LTE-A and 5G, or the like).

In order to better understand a model selection method disclosed in an embodiment of the present disclosure, FIG. 1B below shows a schematic diagram of realizing CSI compression feedback and recovery based on a bilateral AI/ML model. As illustrated in FIG. 1B, the UE side compresses the downlink channel information H through the CSI generation part model, quantizes it into a binary bit stream, and transmits it to the gNB, and the gNB side recovers H' similar to the original downlink information through the CSI recovery part model. The downlink channel information H refers to an estimation result obtained by estimation based on the downlink reference signal, and may be understood as values on some indexes obtained by recalculation based on the measurement result of the downlink reference signal.

The CSI generation part model and the CSI recovery part model are trained through the collected data set. Optionally, the training types of CSI generation part model and CSI recovery part model include the following three types.

Training Type 1: The training of the bilateral model is completed on one side (such as the terminal side or the network side), and then the trained part model is transmitted to the other side. For example, training of the CSI generation part model and the CSI recovery part model is completed on the terminal side, and then the trained CSI recovery part model is transmitted to the network side, or training of the CSI generation part model and the CSI recovery part model is completed on the network side, and then the trained CSI generation part model is transmitted to the terminal side.

Training Type 2: The CSI generation part model and the CSI recovery part model are trained through joint training on the terminal side and the network side, respectively. Alternatively, after training a part model on one side (such as the terminal side or the network side), another part model of the bilateral model is trained on the other side, and a model parameter of the part model first trained is not updated.

Training Type 3: The training of the bilateral model is completed on one side (such as the terminal side or the network side), and then the training data or other auxiliary information is transmitted to the other side to complete the training of another part model. For example, the other auxiliary information refers to an identifier of data input to the model. The input data for different models may vary, and the identifier enables unique identification of the model for which the input data is intended. Data varies across different scenarios (e.g., UMA (Urban Macro coverage scenario), UMi (Urban Micro coverage scenario), Indoor (Indoor coverage scenario), etc.) and under different configurations. Specifically, training Type 3 may be further divided into:

NW-first training: the training of the CSI generation part model and the CSI recovery part model are completed on the network side (such as NW (network) or gNB), and then the data set and/or other auxiliary information for training the CSI generation part model is transmitted to the terminal side.

UE-first training: the training of the CSI generation part model and the CSI recovery part model are completed on the terminal side, and then the data set and/or other auxiliary information for training the CSI recovery part model is transmitted to the network side.

For convenience of expression, an encoder and a decoder represent the CSI generation part model and the CSI recovery part model, respectively, and the UE and/or the gNB may train M encoders and N decoders by one of training Type 1, training Type 2, and training Type 3, where M and N are greater than or equal to 1. Therefore, when M > 1 and N > 1, after the UE selects an encoder/decoder, it is necessary to notify the gNB of the selected encoder/decoder so that the gNB may select a matching decoder. Otherwise, the gNB selecting a mismatched decoder will cause the CSI feedback performance based on the bilateral AI/ML model to be greatly degraded.

Optionally, the UE or gNB selecting the model may be based on the following calculated performance criteria or methods:

Alt1: Intermediate KPI (Key Performance Indicator), such as the square of cosine similarity.

In the Alt1 scheme, the UE may report the target input CSI (input-CSI-NW), or the NW may transmit the target output CSI (output-CSI-UE) to implement the calculation of the intermediate KPI on the NW side or the UE side, respectively. The target input CSI (input-CSI-NW) refers to input data (e.g., input CSI) of the CSI generation part model; and the target output CSI (output-CSI-UE) refers to the output data (e.g., the output CSI) of the CSI recovery part model.

Alt2: Final KPI, such as throughput, BLER (block error rate), assumed BLER or NACK (Negative Acknowledgement)/ACK (Acknowledgement), etc. BLER refers to the percentage of erroneous blocks among all transmitted blocks (only the initially transmitted blocks are counted).

Alt3: The traditional CSI feedback reporting is used as a reference for model selection. The traditional CSI feedback reporting includes CSI measurement and reporting based on a Type I or Type II codebook. Optionally, the codebook type or the codebook parameter may be configured to the UE by the NW.

Alt4: Input or output data distribution of AI/ML network model, such as a data drift change between training data and observation data.

Assuming that M encoders are deployed by the terminal side and N decoders are deployed by the network side, where M and N are greater than or equal to 1, how to ensure that the encoder and decoder selected by UE/gNB match and obtain better CSI feedback performance based on the bilateral AI/ML model is an urgent problem to be solved.

In the related art, in order to determine the matching relationship between the encoder selected by the terminal side and the decoder selected by the network side, indication information is frequently or additionally added, increasing additional signaling overhead. In order to solve the problem, the present disclosure proposes to determine the matching relationship between the encoder and the decoder selected by the UE and the gNB based on the network configuration information, or based on the first indication information for the terminal device and the second indication information for the network device. Since the network configuration information is configured in advance, there is no indication, and both the first indication information and the second indication information are only indicated once, the scheme proposed by the present disclosure may determine the matching relationship between the model selected by the terminal device and the model selected by the network device with less signaling overhead, and ensure the performance of CSI compression feedback.

FIG. 2 is an interactive schematic diagram of a model selection method according to an embodiment of the present disclosure. As illustrated in FIG. 2, embodiments of the present disclosure relate to a model selection method for a communication system 100, and the method includes the following steps.

In step S2101, the network device 102 transmits network configuration information and/or first indication information to the terminal 101.

In some embodiments, terms such as "sending", "emitting", "reporting", "issuing", "transmitting", "bidirectional transmission", "transmitting and/or receiving" may be interchanged with each other.

In some embodiments, the terminal 101 receives the network configuration information and/or the first indication information.

In some embodiments, "acquiring", "obtaining", "getting", "receiving", "transmitting", "bidirectional transmission", "transmitting and/or receiving" may be interchanged with each other, and may be interpreted as receiving from other subjects, obtaining from a protocol, obtaining from a higher layer, obtaining by itself, autonomously implementing, and the like.

In some embodiments, the name of information or the like is not limited to the name described in embodiments, and terms such as "information", "message", "signal", "signaling", "report", "configuration", "indication", "instruction", "command", "channel", "parameter", "domain", "field", "symbol", "codebook", "codeword", "codepoint", "bit", "data", "program", and "chip" may be interchanged with each other.

In some embodiments, the network configuration information is used to select a CSI generation part model and/or a CSI recovery part model.

In some embodiments, the name of the network configuration information is not limited, and is, for example, "network configuration information", "network configuration parameter", and the like.

In some embodiments, the network configuration information may include at least one of a CSI feedback payload size, a codebook type, and/or a codebook parameter, and a CSI reporting parameter. The CSI feedback payload size is an output information length of the CSI generation part model. Optionally, the output information length may be a quantized size of the codeword output by the CSI generation part model.

In some embodiments, terms such as "codebook", "codeword", and "precoding matrix" may be interchanged with each other. For example, the codebook may be a collection of one or more codewords/precoding matrices.

In some embodiments, the CSI feedback payload size has a correspondence with the rank of a selected CSI generation part model, or the CSI feedback payload size has a correspondence with a transmission layer of the selected CSI generation part model, or the CSI feedback payload size has a correspondence with a rank and a transmission layer of a selected CSI generation part model.

The CSI feedback payload size has a correspondence with the rank of the selected CSI generation part model, which means that in a case where the terminal device has a plurality of ranks, the corresponding rank is determined according to the CSI feedback payload size, and the CSI generation part model is selected from at least one CSI generation part model corresponding to the rank.

The CSI feedback payload size has a correspondence with the transmission layer of the selected CSI generation part model, which means that in a case where the terminal device has a plurality of transmission layers, the corresponding transmission layer is determined according to the CSI feedback payload size, and the CSI generation part model is selected from at least one CSI generation part model corresponding to the transmission layer.

The CSI feedback payload size has a correspondence with the rank and the transmission layer of the selected CSI generation part model, which means that in a case where the terminal device has a plurality of ranks and a plurality of transmission layers, the corresponding rank and transmission layer is determined according to the CSI feedback payload size, and the CSI generation part model is selected from at least one CSI generation part model corresponding to the transmission layer of the determined rank.

As an example, assuming that the CSI feedback payload size is represented by the CSI payload size and the rank is represented by rank, the CSI feedback payload size has a correspondence with the rank of the selected CSI generation part model, which means that the CSI feedback payload size may be the CSI payload size corresponding to rank = v, and at this time, the CSI generation part model selected by the terminal 101 is the CSI generation part model corresponding to rank = v. Similarly, the CSI feedback payload size has a correspondence with the transmission layer of the selected CSI generation part model, which means that the CSI feedback payload size may be the CSI payload size corresponding to the i-th transmission layer, and at this time, the CSI generation part model selected by the terminal 101 is the CSI generation part model corresponding to the i-th transmission layer. The CSI feedback payload size has a correspondence with the rank and the transmission layer of the selected CSI generation part model, which means that the CSI feedback payload size may be the CSI payload size corresponding to the i-th transmission layer of the rank = v, and in this time, the CSI generation part model selected by the terminal 101 is the CSI generation part model corresponding to the i-th transmission layer of the rank = v.

In some embodiments, the CSI reporting parameter includes at least one of:

> a transmission bandwidth size;
> a number of subbands;
> a carrier; or
> a number of antenna ports.

In some embodiments, the first indication information is used to select a CSI generation part model.

In some embodiments, the name of the first indication information is not limited, and is, for example, "first indication information", "indication information transmitted by the network", etc.

In some embodiments, the first indication information includes at least one of:

model indication information for the CSI generation part model;
model indication information for the CSI recovery part model;
indication information for an input data type of the CSI generation part model;
indication information for an output quantization approach of the CSI generation part model;
indication information for a training approach of the CSI generation part model; or
indication information for a training approach of the CSI recovery part model.

It should be noted that the training approach of the CSI generation part model and the training approach of the CSI recovery part model may be the same or different. Optionally, in a case where the training approach of the CSI generation part model and the training approach of the CSI recovery part model are the same, the network device 102 may determine only the training approach of the CSI generation part model, or only the training approach of the CSI recovery part model, and carry the determined training approach in the first indication information when instructing. In a case where the training approach of the CSI generation part model and the training approach of the CSI recovery part model are different, the network device 102 may simultaneously determine the training approach of the CSI generation part model and the training approach of the CSI recovery part model, but when instructing, only the training approach of the CSI generation part model is carried in the first indication information, and the training approach of the CSI recovery part model is reserved for use by the network device 102.

In some embodiments, the model indication information for the CSI generation part model is used to indicate a model identifier of the CSI generation part model, or is used to indicate an input data identifier of the CSI generation part model; or
the model indication information for the CSI recovery part model is used to indicate a model identifier of the CSI recovery part model, or is used to indicate an output data identifier of the CSI recovery part model.

The terminal 101 transmits the model indication information for the CSI generation part model to the network device 102, or the network device 102 transmits the model indication information for the CSI recovery part model to the terminal 101, assisting the terminal 101 and the network device 102 in training the bilateral model.

In some embodiments, the input data type includes at least one of:

spatial-frequency domain full channel information;
angle-delay domain coefficient information;
spatial-frequency domain eigenvector information;
time-spatial-frequency domain full channel information; or
Doppler-angle-delay domain coefficient information.

In some embodiments, the output quantization approach includes at least one of: scalar quantization, or vector quantization. The scalar quantization includes uniform or non-uniform scalar quantization.

In some embodiments, the training approach includes at least one of:

different ranks are trained with different CSI generation part models and different CSI recovery part models;
different ranks are trained with one CSI generation part model and one CSI recovery part model;
different ranks are trained with the same CSI generation part model and the same CSI recovery part model, and different transmission layers of the same rank are trained with different CSI generation part models and different CSI recovery part models;
different transmission layers of different ranks are trained with different CSI generation part models and different CSI recovery part models;
all transmission layers of different ranks are trained with one CSI generation part model and one CSI recovery part model; or
different ranks are trained with different CSI generation part models and different CSI recovery part models, and all transmission layers of the same rank are trained with the same CSI generation part model and the same CSI recovery part model.

Optionally, assuming that the rank is represented by rank, the CSI generation part model is represented by encoder, and the CSI recovery part model is represented by decoder, the training approaches may be divided into the following six types.

Training approach 1 (rank specific): refers to different ranks being trained with different encoders and different decoders.

Training approach 2 (rank common): refers to different ranks being trained with one encoder and one decoder.

Training approach 3 (layer specific and rank common): refers to different ranks using the same encoder and the same decoder, but different transmission layers of a certain rank using different encoders and different decoders.

Training approach 4 (layer specific and rank specific): refers to each transmission layer of different ranks being trained with one encoder and one decoder.

Training approach 5 (layer common and rank common): refers to all transmission layers of different ranks being trained with only one encoder and only one decoder.

Training approach 6 (layer common and rank specific): refers to different ranks being trained with different encoders and different decoders, but all transmission layers of a certain rank using the same encoder and the same decoder.

In some embodiments, the first indication information is carried in at least one of a DCI (downlink control information), a MAC (Media Access Control) CE (Control Element) message, and an RRC (Radio Resource Control) message. That is, the network device 102 may transmit the first indication information to the terminal 101 through one or more of DCI, MAC CE, or RRC signaling.

In some embodiments, terms such as "down control information", "downlink control information (DCI)", "downlink (DL) assignment", "DL DCI", "uplink (UL) grant", and "UL DCI" may be interchanged with each other.

In some embodiments, in a case where the first indication information does not include the model indication information, the terminal 101 may transmit the model indication information for the selected CSI generation part model to the network device, so that the network device 102 determines a matching CSI recovery part model based on the model indication information.

In step S2102, the terminal 101 selects the CSI generation part model according to the network configuration information and/or the first indication information.

In some embodiments, the terminal 101 may select the CSI generation part model according to the network configuration information, may select the CSI generation part model according to the first indication information, or may select the CSI generation part model according to the network configuration information and the first indication information.

Optionally, the encoder and the decoder respectively represent the CSI generation part model and the CSI recovery part model, and the terminal 101 selects the CSI generation part model according to the network configuration information, which may be divided into the following three situations.

Alt1-1: the terminal 101 selects an encoder according to the CSI feedback payload size configured by the network device 102. The network device 102 selects a decoder that matches the encoder according to the configured payload size.

Alt1-2: the terminal 101 selects an encoder according to a payload size determined by the codebook type or the codebook parameter configured by the network device 102. The network device 102 selects a decoder that matches the encoder according to the payload size. Optionally, the terminal 101 may select an encoder corresponding to the smallest absolute value of a difference between the payload size determined by the codebook type or the codebook parameter configured by the network device 102 and the payload size output by the encoder, or may select an encoder corresponding to the payload size determined by the codebook type or the codebook parameter configured by the network device 102 within an interval range of the payload size output by the encoder.

Alt1-3: the terminal 101 selects an encoder according to the CSI reporting parameter configured by the network device 102, such as the transmission bandwidth size, the number of subbands, the carrier, and the number of antenna ports. The network device 102 selects a decoder that matches the encoder according to the CSI reporting parameter configured to the terminal 101.

Note that the terminal 101 and the network device 102 may determine the matching encoder and decoder according to at least one approach of Alt1-1 to Alt1-3 described above.

As an example, $l_i$ represents the payload size output by an encoder corresponding to the i-th transmission layer. In addition, assuming that three encoder models are deployed by the UE side, the output payload size of these three encoders is scalable. For example, the maximum output of encoder 1 is 60 bits, the output range of encoder 2 is 61 bits to 120 bits, and the output range of encoder 3 is greater than 120 bits.

It is assumed that the gNB configures training approach 3 to the UE through RRC signaling, that is, layer specific and rank common, and the gNB configures the UE with a maximum payload size of 100 bits per layer for transmission. According to Alt1-1, the UE will select encoder2 for CSI compression feedback, and accordingly, the gNB will select the decoder corresponding to encoder2.

Furthermore, assuming that the gNB configures the UE with a Rel-16 Type II codebook, and configures, through RRC signaling, the UE with a codebook parameter combination of 1, the number of CSI-RS ports of 16, the number of subbands of 12, and the configuration data transmission rank constraint of 1, etc. The UE may determine that the maximum payload size is 49 bits according to the parameter configured by the gNB. According to Alt1-2, the UE will select encoder1 for CSI compression feedback, and accordingly, the gNB will select the decoder corresponding to encoder1.

Optionally, the encoder and the decoder respectively represent the CSI generation part model and the CSI recovery part model, and the terminal 101 selects the CSI generation part model according to the first indication information, which may be divided into the following four situations.

Alt2-1: The network device 102 directly transmits the model indication information for the encoder used by the terminal 101 or the model indication information for the decoder used by the network device 102 to the terminal 101. The terminal 101 selects an encoder that matches the decoder used by the network device 102 based on the indication information.

Alt2-2: The network device 102 transmits indication information for the input data type of the encoder to the terminal 101, the terminal 101 determines an encoder based on the indication information, and the network device 102 determines a matching decoder based on the data type of the encoder. Alternatively, the network device 102 determines a matching decoder after receiving the indication information for the encoder selected by the terminal 101.

Alt2-3: The network device 102 transmits indication information for the output quantization approach of the encoder to the terminal 101, the terminal 101 determines an encoder according to the indication information, and the network device 102 determines a matching decoder according to the output quantization approach of the encoder. Alternatively, the network device 102 determines a matching decoder after receiving the indication information for the encoder selected by the terminal 101.

Alt2-4: The network device 102 transmits indication information for the training approach of the encoder or the indication information for the training approach of the decoder to the terminal 101, and then the terminal 101 selects an encoder according to the received indication information.

Note: The terminal 101 may determine an encoder that matches the decoder used by the network device 102 by one or more of Alt2-1 to Alt2-4.

The above-described model indication information may also be used to indicate a model identifier or an input data identifier. Optionally, the terminal 101 transmits the dataset ID to the network device 102, or the network device 102 transmits dataset ID to the terminal 101, for assisting the terminal 101 and the network device 102 in training the bilateral model.

As an example, it is assumed that 4 pairs of encoders and decoders are deployed by the UE and gNB, as shown in Table 1:

Table 1 4 pairs of encoders and decoders

|  | scenario | input data type of encoder | quantification type |
|---|---|---|---|
| Pair1(encoder1-decoder1) | UMA/UMi | spatial-frequency domain channel eigenvector | scalar quantization |
| Pair2(encoder2-decoder2) | UMA/UMi | spatial-frequency domain channel eigenvector | vector quantization |
| Pair3(encoder3-decoder3) | indoor | spatial-frequency domain full channel information | scalar quantization |
| Pair4(encoder4-decoder4) | indoor | spatial-frequency domain full channel information | vector quantization |

It is assumed that the gNB configures the scenario in which the UE is located as UMA through RRC signaling, and indicates that the input data type of the encoder is a spatial-frequency domain channel eigenvector, and the codeword output by the encoder is vector quantized and reported to the gNB. According to the configured information, the UE may determine to use the encoder in Pair2 to perform compression and feedback on the CSI, and similarly, the gNB may determine to use the decoder in Pair2 to restore the compressed CSI.

In step S2103, the terminal 101 transmits the second indication information to the network device 102.

In some embodiments, the network device 102 receives the second indication information.

In some embodiments, the second indication information is used for selecting a CSI recovery part model.

In some embodiments, the name of the second indication information is not limited, and is, for example, "second indication information", "indication information for an encoder selected and reported by the terminal", or the like.

In some embodiments, the second indication information may include at least one of:

model indication information for the CSI generation part model;
model indication information for the CSI recovery part model;
indication information for a training approach of the CSI generation part model; or
indication information for a training approach of the CSI recovery part model.

In some embodiments, the model indication information for the CSI generation part model may be indicated by

$\left\lceil \log_2^{N_1} \right\rceil$ bits, in which $N_1$ is the number of the CSI generation part models deployed by the terminal 101, and/or the model indication information for the CSI recovery part model is indicated by $\left\lceil \log_2^{N_2} \right\rceil$ bits, in which $N_2$ is the number of the CSI recovery part models deployed by the network device 102. It should be noted that the values of $N_1$ and $N_2$ may be the same or different, that is, the number of CSI generation part models deployed by the terminal 101 and the number of CSI recovery part models deployed by the network device 102 may be the same or different.

For example, the encoder and the decoder represent the CSI generation part model and the CSI recovery part model, respectively, and it is assumed that N pairs of encoders and decoders are deployed by the terminal 101 and the network device 102, in this case, since the number of encoders and decoders is the same, the encoder used by the terminal 101 or the decoder used by the network device 102 may be indicated by $\left\lceil \log_2^{N} \right\rceil$ bits, so that the encoder used by the terminal 101 and the decoder used by the network device 102 may be matched. Assuming that $N_1$ encoders are deployed by the terminal 101 and $N_2$ decoders are deployed by the network device 102, and the values of $N_1$ and $N_2$ are different, the encoder used by the terminal 101 may be indicated by $\left\lceil \log_2^{N_1} \right\rceil$ bits, and/or the decoder used by the network device 102 may be indicated by $\left\lceil \log_2^{N_2} \right\rceil$ bits, so that the encoder used by the terminal 101 and the decoder used by the network device 102 match each other.

In some embodiments, the model indication information for the i-th transmission layer of the CSI generation part model may be indicated by $\left\lceil \log_2^{Mi_1} \right\rceil$ bits, in which $Mi_1$ is the number of the CSI generation part models deployed by the terminal 101 on the i-th transmission layer, and/or the model indication information for the i-th transmission layer of the CSI recovery part model is indicated by $\left\lceil \log_2^{Mi_2} \right\rceil$ bits, in which $Mi_2$ is the number of the CSI recovery part models deployed by the network device 102 on the i-th transmission layer. The training approach for the CSI generation part model and/or the training approach for the CSI recovery part model indicates that different CSI generation part models and different CSI recovery part models are trained for different transmission layers. It should be noted that the values of $Mi_1$ and $Mi_2$ may be the same or different, that is, the number of CSI generation part models deployed by the terminal 101 on the i-th transmission layer and the number of CSI recovery part models deployed by the network device 102 on the i-th transmission layer may be the same or different.

For example, the encoder and the decoder represent the CSI generation part model and the CSI recovery part model, respectively, and for the layer-specific trained encoder and decoder, it is assumed that Mi encoders and decoders are trained on the i-th transmission layer, in this case, since the number of encoders and decoders is the same, the encoder used on the i-th transmission layer or the decoder used on the i-th transmission layer may be indicated by $\left\lceil \log_2^{Mi} \right\rceil$ bits, so that the encoder used by the terminal 101 and the decoder used by the network device 102 may be matched. Assuming that $Mi_1$ encoders and $Mi_2$ decoders are trained on the i-th transmission layer, and the values of $Mi_1$ and $Mi_2$ are different, the encoder used on the i-th transmission layer may be indicated by $\left\lceil \log_2^{Mi_1} \right\rceil$ bits, and/or the decoder used on the i-th transmission layer may be indicated by $\left\lceil \log_2^{Mi_2} \right\rceil$ bits, so that the encoder used by the terminal 101 and the decoder used by the network device 102 match each other.

In some embodiments, the indication information for the training approach of the CSI generation part model may be indicated by $\left\lceil \log_2^{K_1} \right\rceil$ bits, in which $K_1$ is the number of training approaches employed by the terminal 101, and/or the indication information for the training approach of the CSI recovery part model may be indicated by $\left\lceil \log_2^{K_2} \right\rceil$ bits, in which $K_2$ is the number of training approaches employed by the network device 102. It should be noted that the values of $K_1$ and $K_2$ may be the same or different, that is, the number of training approaches employed by the terminal 101 and the number of training approaches employed by the network device 102 may be the same or different.

For example, the encoder and the decoder represent the CSI generation part model and the CSI recovery part model, respectively, and it is assumed that there are K types of training approaches, that is, the number of training approaches employed by the terminal 101 and the number of training approaches employed by the network device 102 are the same, and the training approach employed by the terminal 101 or the training approach employed by the network device 102 may be indicated by $\left\lceil \log_2^{K} \right\rceil$ bits, so that the encoder used by the terminal 101 and the decoder used by the network device 102 may be matched. Assuming that the number of training approaches employed by the terminal 101 is $K_1$, and the number of training approaches employed by the network device 102 is $K_2$, and the values of $K_1$ and $K_2$ are different, the training approach employed by the terminal 101 may be indicated by $\left\lceil \log_2^{K_1} \right\rceil$ bits, and/or the training approach employed by the network device 102 may be indicated by $\left\lceil \log_2^{K_2} \right\rceil$ bits, so that the encoder used by the terminal 101 and the decoder used by the network device 102 match each other.

In some embodiments, the model indication information for the CSI generation part model and/or the indication information for the training approach of the CSI generation part model is carried in at least one of:

CSI Part1;
CSI Part2; or
a radio resource control (RRC) message.

That is, the terminal 101 may report the model indication information for the CSI generation part model through the CSI part1 and/or part2, or may transmit the model indication information for the CSI generation part model to the network device 102 through the RRC message.

In some embodiments, in a case where the second indication information includes the indication information for the training approach of the CSI generation part model or the second indication information includes the indication information for the training approach of the CSI recovery part model, the second indication information may further include the indication information that whether the CSI feedback payload size output by the CSI generation part model is variable. The indication information is used for the network device 102 to select whether the input information length is variable for a decoder according to the indication information.

In some embodiments, the model indication information for the CSI generation part model is used to indicate a model identifier of the CSI generation part model, or is used to indicate an input data identifier of the CSI generation part model; or

the model indication information for the CSI recovery part model is used to indicate a model identifier of the CSI recovery part model, or is used to indicate an output data identifier of the CSI recovery part model.

In some embodiments, the training approach includes at least one of:

different ranks are trained with different CSI generation part models and different CSI recovery part models;
different ranks are trained with one CSI generation part model and one CSI recovery part model;
different ranks are trained with the same CSI generation part model and the same CSI recovery part model, and different transmission layers of the same rank are trained with different CSI generation part models and different CSI recovery part models;
different transmission layers of different ranks are trained with different CSI generation part models and different CSI recovery part models;
all transmission layers of different ranks are trained with one CSI generation part model and one CSI recovery part model; or
different ranks are trained with different CSI generation part models and different CSI recovery part models, and all transmission layers of the same rank are trained with the same CSI generation part model and the same CSI recovery part model.

Optionally, assuming that the rank is represented by rank, the CSI generation part model is represented by encoder, and the CSI recovery part model is represented by decoder, the training approaches may be divided into the following six types.

Training approach 1 (rank specific): refers to different ranks being trained with different encoders and different decoders.

Training approach 2 (rank common): refers to different ranks being trained with one encoder and one decoder.

Training approach 3 (layer specific and rank common): refers to different ranks using the same encoder and the same decoder, but different transmission layers of a certain rank using different encoders and different decoders.

Training approach 4 (layer specific and rank specific): refers to each transmission layer of different ranks being trained with one encoder and one decoder.

Training approach 5 (layer common and rank common): refers to all transmission layers of different ranks being trained with only one encoder and only one decoder.

Training approach 6 (layer common and rank specific): refers to different ranks being trained with different encoders and different decoders, but all transmission layers of a certain rank using the same encoder and the same decoder.

In step S2104, the network device 102 selects the CSI recovery part model according to the network configuration information and/or the second indication information.

In some embodiments, the network device 102 may select the CSI recovery part model according to the network configuration information, may select the CSI recovery part model according to the second indication information, or may select the CSI recovery part model according to the network configuration information and the second indication information.

Optionally, the encoder and the decoder respectively represent the CSI generation part model and the CSI recovery part model, and the network device 102 selects the CSI recovery part model according to the network configuration information, which may be divided into the following three situations.

Alt1-1: the terminal 101 selects an encoder according to the CSI feedback payload size configured by the network device 102. The network device 102 selects a decoder that matches the encoder according to the configured payload size.

Alt1-2: the terminal 101 selects an encoder according to a payload size determined by the codebook type or the codebook parameter configured by the network device 102. The network device 102 selects a decoder that matches the encoder according to the payload size. Optionally, the terminal 101 may select an encoder corresponding to the smallest absolute value of a difference between the payload size determined by the codebook type or the codebook parameter configured by the network device 102 and the payload size output by the encoder, or may select an encoder corresponding to the payload size determined by the codebook type or the codebook parameter configured by the network device 102 within an interval range of the payload size output by the encoder.

Alt1-3: the terminal 101 selects an encoder according to the CSI reporting parameter configured by the network device 102, such as the transmission bandwidth size, the number of subbands, the carrier, and the number of antenna ports. The network device 102 selects a decoder that matches the encoder according to the CSI reporting parameter configured to the terminal 101.

Note that the terminal 101 and the network device 102 may determine the matching encoder and decoder according to at least one approach of Alt1-1 to Alt1-3 described above.

As an example, $l_i$ represents the payload size output by an encoder corresponding to the i-th transmission layer. In addition, assuming that three encoder models are deployed by the UE side, the output payload size of these three encoders is scalable. For example, the maximum output of encoder 1 is 60 bits, the output range of encoder 2 is 61 bits to 120 bits, and the output range of encoder 3 is greater than 120 bits.

It is assumed that the gNB configures training approach 3 to the UE through RRC signaling, that is, layer specific and rank common, and the gNB configures the UE with a maximum payload size of 100 bits per layer for transmission. According to Alt1-1, the UE will select encoder2 for CSI compression feedback, and accordingly, the gNB will select the decoder corresponding to encoder2.

Furthermore, assuming that the gNB configures the UE with a Rel-16 Type II codebook, and configures, through RRC signaling, the UE with a codebook parameter combination of 1, the number of CSI-RS ports of 16, the number of subbands of 12, and the configuration data transmission rank constraint of 1, etc. The UE may determine that the maximum payload size is 49 bits according to the parameter configured by the gNB. According to Alt1-2, the UE will select encoder1 for CSI compression feedback, and accordingly, the gNB will select the decoder corresponding to encoder1.

Optionally, the encoder and the decoder respectively represent the CSI generation part model and the CSI recovery part model, and the network device 102 selects the CSI recovery part model according to the second indication information, which may be divided into the following two situations.

Alt3-1: The terminal 101 transmits the indication information for the selected encoder/decoder to the network device 102, and the network device 102 determines a matching decoder according to the received indication information. The indication information for the encoder may be reported in the following approaches.

Option1: The indication information for the encoder is reported by being included in the CSI part1/part2.

Option2: The indication information for the encoder is transmitted to the network through RRC signaling.

Assuming that N pairs of encoders and decoders are deployed by the terminal 101 and the network device 102, in this case, since the number of encoders and decoders is the same, the terminal 101 may indicate the encoder used by the terminal 101 or the decoder used by the network device 102 by $\left\lceil \log_2^N \right\rceil$ bits, so that the encoder used by the terminal 101 and the decoder used by the network device 102 may be matched. Optionally, for the layer-specific trained encoder and decoder, it is assumed that Mi encoders and decoders are trained on the i-th layer, in this case, since the number of encoders and decoders is the same, the terminal 101 indicates the encoder used on the i-th layer by $\left\lceil \log_2^{Mi} \right\rceil$ bits, and the network device 102 may determine a matching decoder used by the network device 102 according to the indication information.

Alt3-2: The terminal 101 transmits the indication information to the network device 102 for indicating the training approach of the encoder and the decoder employed by the terminal, and the network device 102 determines a matching decoder according to the received indication information.

Assuming that there are K types of training approaches, that is, the number of training approaches employed by the terminal 101 is the same as the number of training approaches employed by the network device 102, the terminal 101 indicates the training approach employed by the terminal 101 by $\lceil \log_2^K \rceil$ bits. Optionally, the indication information reported by the terminal 101 further includes indication information that whether the CSI feedback payload size output by the CSI generation part model is variable. The indication information is used for the network device 102 to select whether the input information length is variable for the decoder according to the indication information.

Note: The network device 102 may determine a decoder that matches the encoder used by the terminal 101 by one or more of candidate approaches of Alt3-1 or Alt3-2.

The above indication information for the encoder/decoder may be used to indicate a model identifier or an input data identifier for the encoder/decoder. Optionally, the terminal 101 transmits the dataset ID to the network device 102 or the network device 102 transmits dataset ID to the terminal 101, for assisting the terminal 101 and the network device 102 in training the bilateral model.

As an example, it is assumed that the UE and the gNB configure three pairs of encoders and decoders, the terminal indicates the encoder used by the UE by $\lceil \log_2^N \rceil = 2 \text{bits}$, and the gNB determines a decoder that matches the encoder according to the indication information.

Assuming that the UE, via RRC signaling or the gNB transmitting RRC to the UE, indicates that the training approach of the encoder and the decoder is layer-specific and rank-common, the gNB also configures the UE with a transmission rank constraint of 2. Two encoders are trained for layer 1, and the corresponding payload sizes of these two encoders are 80 bits and 160 bits. Two encoders are also trained for layer 2, and the corresponding payload sizes of these two encoders are 50 bits and 100 bits. The UE determines that rank = 2 according to the estimated downlink channel calculation and the maximum payload size configured by the gNB, and indicates the encoder selected by the UE by $\lceil \log_2^{Mi} \rceil = 1 \text{bit}$, and the gNB determines the matching decoder to be employed according to the reported rank and the indication information for the encoder selected by the UE.

The model selection method according to embodiments of the present disclosure may include at least one of steps S2101 to S2104. For example, step S2102 may be implemented as an independent embodiment, step S2104 may be implemented as an independent embodiment, and step S2101+step S2102 may be implemented as an independent embodiment, which is not limited to this.

In the present implementation or embodiment, the steps may be independent, arbitrarily combined, or exchanged in order, and the optional ways or optional examples may be arbitrarily combined, and may be arbitrarily combined with any steps of other implementations or other embodiments, as long as there is no contradiction.

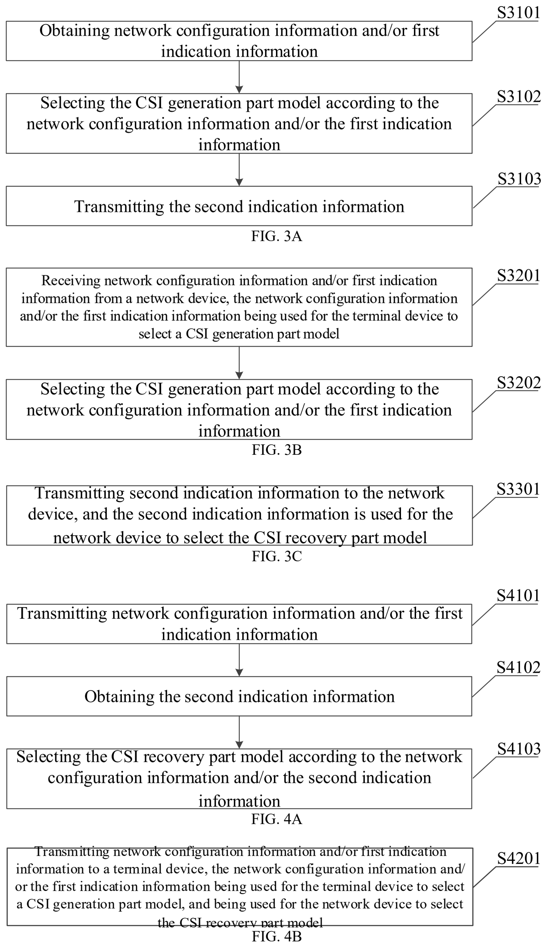

FIG. 3A is an interactive schematic diagram of a model selection method according to an embodiment of the present disclosure. As illustrated in FIG. 3A, embodiments of the present disclosure relate to a model selection method (a terminal side), and the method includes the following steps.

In step S3101, network configuration information and/or first indication information is obtained.

For an optional implementation of step S3101, reference may be made to the optional implementation of step S2101 in FIG. 2 and other associated parts in the embodiment related to FIG. 2, which is not repeated here.

In some embodiments, the network configuration information and/or the first indication information are used for the terminal device to select the CSI generation part model.

In some embodiments, the terminal 101 receives the network configuration information and/or the indication information transmitted by the network device 102, which is not limited to this, and may also receive the network configuration information and/or the first indication information transmitted by other bodies.

In some embodiments, the terminal 101 obtains the network configuration information and/or the first indication information specified by a protocol.

In some embodiments, the terminal 101 obtains the network configuration information and/or the first indication information from an upper layer(s).

In some embodiments, the terminal 101 performs processing to obtain the network configuration information and/or the first indication information.

In some embodiments, step S3101 is omitted, and the terminal 101 autonomously implements the functions indicated by the network configuration information and/or the first indication information, or the above functions are default.

In step S3102, the CSI generation part model is selected according to the network configuration information and/or the first indication information.

For an optional implementation of step S3102, reference may be made to the optional implementation of step S2102 in FIG. 2 and other associated parts in the embodiment related to FIG. 2, which is not repeated here.

In some embodiments, the CSI generation part model is determined based on the network configuration information, or the CSI generation part model is determined based on the first indication information, or the CSI generation part model is determined based on the network configuration information and the first indication information.

In step S3103, the second indication information is transmitted.

For an optional implementation of step S3103, reference may be made to the optional implementation of step S2103 in FIG. 2 and other associated parts in the embodiment related to FIG. 2, which is not repeated here.

In some embodiments, the second indication information is used for the network device to select the CSI recovery part model.

In some embodiments, the terminal 101 transmits the second indication information to the network device 102, which is not limited to this, and may also transmit the second indication information to other bodies.

Optionally, the second indication information is used for the network device 102 to select the CSI recovery part model according to the second indication information. For its optional implementation, reference may be made to the optional implementation of step S2104 in FIG. 2 and other associated parts in the embodiment related to FIG. 2, which is not repeated here.

The model selection method according to embodiments of the present disclosure may include at least one of steps S3101 to S3103. For example, step S3101 may be implemented as an independent embodiment, step S3103 may be implemented as an independent embodiment, and step S3101+step S3102 may be implemented as an independent embodiment, which is not limited to this.

In some embodiments, steps S3102, S3103 may be performed in an exchange order or simultaneously.

In some embodiments, steps S3102, S3103 are optional, and one or more of these steps may be omitted or replaced in different embodiments.

In some embodiments, steps S3101, S3102 are optional, and one or more of these steps may be omitted or replaced in different embodiments.

FIG. 3B is a flowchart of a model selection method according to an embodiment of the present disclosure. As illustrated in FIG. 3B, embodiments of the present disclosure relate to a model selection method (a terminal side), and the method includes the following steps.

In step S3201, network configuration information and/or first indication information is received from a network device, the network configuration information and/or the first indication information being used for the terminal device to select a channel state information (CSI) generation part model.

For an optional implementation of step S3201, reference may be made to the optional implementation of step S2101 in FIG. 2, optional implementation of step S3101 in FIG. 3A, and other associated parts in embodiments related to FIG. 2 and FIG. 3A, which is not repeated here.

In step S3202, the CSI generation part model is selected according to the network configuration information and/or the first indication information.

For an optional implementation of step S3201, reference may be made to the optional implementation of step S2102 in FIG. 2, optional implementation of step S3102 in FIG. 3A, and other associated parts in embodiments related to FIG. 2 and FIG. 3A, which is not repeated here.

The model selection method according to embodiments of the present disclosure may include at least one of steps S3201 to S3202. For example, step S3201 may be implemented as an independent embodiment, step S3202 may be implemented as an independent embodiment, and step S3201+step S3202 may be implemented as an independent embodiment.

In some embodiments, step S3202 is optional, and this step may be omitted or replaced in different embodiments.

In embodiments of the present disclosure, step S3201 may be combined with step S3102 of FIG. 3A, and step S3202 may be combined with step S3101 of FIG. 3A.

FIG. 3C is a flowchart of a model selection method according to an embodiment of the present disclosure. As illustrated in FIG. 3C, embodiments of the present disclosure relate to a model selection method (a terminal side), and the method includes the following step.

In step S3301, second indication information is transmitted to the network device, and the second indication information is used for the network device to select the CSI recovery part model.

For an optional implementation of step S3301, reference may be made to the optional implementation of step S2103 in FIG. 2, optional implementation of step S3103 in FIG. 3A, and other associated parts in embodiments related to FIG. 2 and FIG. 3A, which is not repeated here.

FIG. 4A is an interactive schematic diagram of a model selection method according to an embodiment of the present disclosure. As illustrated in FIG. 4B, embodiments of the present disclosure relate to a model selection method (a network device side), and the method includes the following steps.

In step 1401, network configuration information and/or the first indication information is transmitted.

For an optional implementation of step S4101, reference may be made to the optional implementation of step S2101 in FIG. 2 and other associated parts in the embodiment related to FIG. 2, which is not repeated here.

In some embodiments, the network configuration information and/or the first indication information is used for the terminal device to select a channel state information (CSI) generation part model and is used for the network device to select a CSI recovery part model.

In some embodiments, the network device 102 transmits the network configuration information and/or the first indication information to the terminal 101, which is not limited to this, and may also transmit the network configuration information and/or the first indication information to other bodies.

Optionally, the network configuration information and/or the first indication information are used for the terminal 101 to select the CSI generation part model. For its optional implementation, reference may be made to the optional implementation of step S2102 in FIG. 2 and other associated parts in the embodiment related to FIG. 2, which is not repeated here.

In step S4102, the second indication information is obtained.

For an optional implementation of step S4102, reference may be made to the optional implementation of step S2103 in FIG. 2 and other associated parts in the embodiment related to FIG. 2, which is not repeated here.

In some embodiments, the second indication information is used for the network device to select the CSI recovery part model.

In some embodiments, the network device 102 receives the second indication information transmitted by the terminal 101, which is not limited to this, and may also receive the second indication information transmitted by other bodies.

In some embodiments, the network device 102 obtains the second indication information specified by the protocol.

In some embodiments, the network device 102 obtains the second indication information from an upper layer(s).

In some embodiments, the network device 102 performs processing to obtain the second indication information.

In some embodiments, step S4102 is omitted, and the network device 102 autonomously implements the functions indicated by the second indication information, or the above functions are default.

In step S4103, the CSI recovery part model is selected according to the network configuration information and/or the second indication information.

For an optional implementation of step S4103, reference may be made to the optional implementation of step S2104 in FIG. 2 and other associated parts in the embodiment related to FIG. 2, which is not repeated here.

In some embodiments, the CSI recovery part model is determined based on the network configuration information, or the CSI recovery part model is determined based on the second indication information, or the CSI recovery part model is determined based on the network configuration information and the second indication information.

The communication method according to embodiments of the present disclosure may include at least one of steps S4101 to S4103. For example, step S4101 may be implemented as an independent embodiment, step S4103 may be implemented as an independent embodiment, and step S4101+step S4102 may be implemented as an independent embodiment, which is not limited to this.

In some embodiments, steps S4101, S4102 may be performed in an exchange order or simultaneously.

In some embodiments, steps S4102, S4103 are optional, and one or more of these steps may be omitted or replaced in different embodiments.

In some embodiments, steps S4101, S4102 are optional, and one or more of these steps may be omitted or replaced in different embodiments.

FIG. 4B is a flowchart of a model selection method according to an embodiment of the present disclosure. As illustrated in FIG. 4B, embodiments of the present disclosure relate to a model selection method (a network device side), and the method includes the following step.

In step S4201, network configuration information and/or first indication information is transmitted to a terminal device, the network configuration information and/or the first indication information being used for the terminal device to select a channel state information (CSI) generation part model, and being used for the network device to select the CSI recovery part model.

For an optional implementation of step S4201, reference may be made to the optional implementation of step S2101 in FIG. 2, optional implementation of step S4101 in FIG. 4A, and other associated parts in embodiments related to FIG. 2 and FIG. 4A, which is not repeated here.

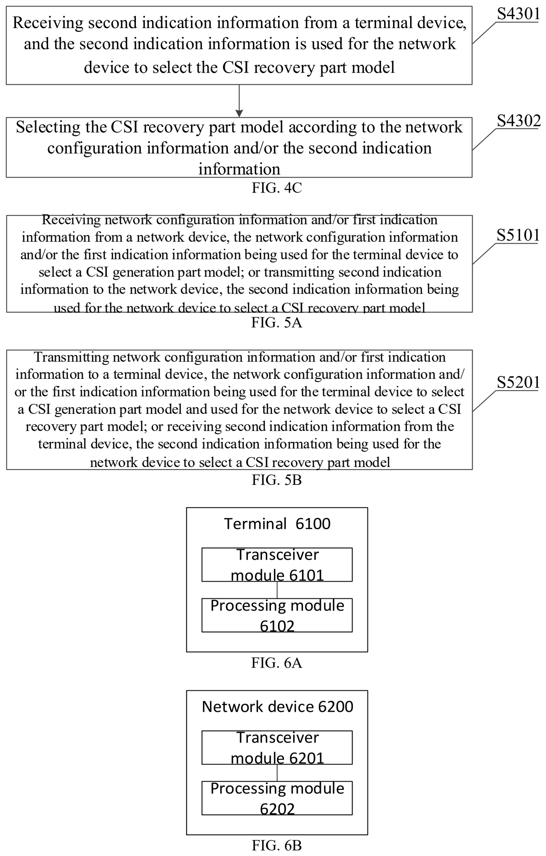

FIG. 4C is a flowchart of a model selection method according to an embodiment of the present disclosure. As illustrated in FIG. 4C, embodiments of the present disclosure relate to a model selection method (a network device side), and the method includes the following steps.

In step S 4301, second indication information is received from a terminal device, and the second indication information is used for the network device to select the CSI recovery part model.

For an optional implementation of step S4301, reference may be made to the optional implementation of step S2103 in FIG. 2, optional implementation of step S3102 in FIG. 4A, and other associated parts in embodiments related to FIG. 2 and FIG. 4A, which is not repeated here.

In step S4302, the CSI recovery part model is selected according to the network configuration information and/or the second indication information.

For an optional implementation of step S4302, reference may be made to the optional implementation of step S2104 in FIG. 2, optional implementation of step S4103 in FIG. 4A, and other associated parts in embodiments related to FIG. 2 and FIG. 4A, which is not repeated here.

The model selection method according to embodiments of the present disclosure may include at least one of steps S4301 to S4302. For example, step S4301 may be implemented as an independent embodiment, step S4302 may be implemented as an independent embodiment, and step S4301+step S4302 may be implemented as an independent embodiment.

In some embodiments, step S4302 is optional, and this step may be omitted or replaced in different embodiments.

In embodiments of the present disclosure, step S4301 may be combined with step S4103 of FIG. 4A, and step S4302 may be combined with step S4102 of FIG. 3A.

FIG. 5A is an interactive schematic diagram of a model selection method according to an embodiment of the present disclosure. As illustrated in FIG. 5A, embodiments of the present disclosure relate to a model selection method, and the method includes the following step.

In step S5101, network configuration information and/or first indication information is received from a network device, the network configuration information and/or the first indication information being used for the terminal device to select a channel state information (CSI) generation part model; or second indication information is transmitted to the network device, the second indication information being used for the network device to select a CSI recovery part model.

For an optional implementation of step S5101, reference may be made to the optional implementations of steps S2101 and S2103 in FIG. 2, steps S3101 and S3103 in FIG. 3A, and steps S4101 and S4102 in FIG. 4A, and other associated parts in embodiments related to FIG. 2, FIG. 3A, and FIG. 4A, which is not repeated here.

In some embodiments, the above method may include the method described in the above embodiments related to the communication system side, the terminal side, the access network device side, the core network device side, the first network element side, the second network element side, and the like, which is not repeated here.

FIG. 5B is an interactive schematic diagram of a model selection method according to an embodiment of the present disclosure. As illustrated in FIG. 5B, embodiments of the present disclosure relate to a model selection method, and the method includes the following step.

In step S5201, network configuration information and/or first indication information is transmitted to a terminal device, the network configuration information and/or the first indication information being used for the terminal device to select a channel state information (CSI) generation part model and used for the network device to select a CSI recovery part model; or second indication information is received from the terminal device, the second indication information being used for the network device to select a CSI recovery part model.

For an optional implementation of step S5201, reference may be made to the optional implementation of steps S2101 and S2103 in FIG. 2, and steps S4101 and S4102 in FIG. 4A, and other associated parts in embodiments related to FIG. 2 and FIG. 4A, which is not repeated here.

In some embodiments, the above method may include the method described in the above embodiments related to the core network device side, the first network element side, the second network element side, and the like, which is not repeated here.

Embodiments of the present disclosure also provide an apparatus for implementing any of the above methods, for example, an apparatus including a unit or a module for implementing steps performed by a terminal in any of the above methods is provided. For another example, another apparatus is provided, including a unit or module for implementing the steps performed by a network device (e.g., an access network device, a core network function node, a core network device, etc.) in any of the above methods.

It should be understood that the division of various units or modules in the above apparatus is only a division of logical functions, and may be fully or partially integrated into one physical entity or may be physically separated when actually implemented. Furthermore, units or modules in the apparatus may be implemented in the form of a processor calling software: for example, the apparatus includes a processor, the processor is connected to a memory, the memory has instructions stored therein, and the processor calls the instructions stored in the memory to implement any of the above methods or to implement the functions of each unit or module of the apparatus, in which the processor is, for example, a general purpose processor, such as a central processing unit (CPU) or a microprocessor, and the memory is a memory within the apparatus or a memory outside the apparatus. Alternatively, the units or modules in the apparatus may be implemented in the form of a hardware circuit, and some or all of the functions of the units or modules may be implemented by designing the hardware circuit, and the above hardware circuit may be understood as one or more processors; for example, in an implementation, the hardware circuit is an application-specific integrated circuit (ASIC), and the functions of some or all of the above units or modules are realized by designing the logical relationship of elements in the circuit; for another example, in another implementation, the hardware circuit may be implemented by a programmable logic device (PLD). Taking a field programmable gate array (FPGA) as an example, the hardware circuit can include a large number of logic gate circuits, and the connection relationship between the logic gate circuits is configured by a configuration file, realizing the functions of some or all of the above units or modules. All units or modules of the above apparatus may be implemented entirely in the form of the processor calling software, or entirely in the form of hardware circuit, or partially in the form of the processor calling software, and the rest in the form of hardware circuit.

In embodiments of the present disclosure, the processor is a circuit having signal processing capabilities, and in an implementation, the processor may be a circuit having instruction reading and running capabilities, such as a central processing unit (CPU), a microprocessor, a graphics processing unit (GPU) (which may be understood as a microprocessor), or a digital signal processor (DSP), etc.; in another implementation, the processor may implement certain functions through the logical relationship of hardware circuits that are fixed or reconfigurable, for example, the processor is a hardware circuit implemented by an application-specific integrated circuit (ASIC) or a programmable logic device (PLD), such as an FPGA. In the reconfigurable hardware circuit, the process in which the processor loads a configuration document to implement the configuration of the hardware circuit may be understood as the process in which the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 6A is a block diagram of a terminal 6100 provided by an embodiment of the present disclosure. As illustrated in FIG 6A, the terminal 6100 may include at least one of a transceiver module 6101 and a processing module 6102. In some embodiments, the transceiver module is configured to receive network configuration information and/or first indication information from a network device, the network configuration information and/or the first indication information being used for the terminal device to select a channel state information (CSI) generation part model; or the transceiver module is configured to transmit second indication information to the network device, the second indication information being used for the network device to select a CSI recovery part model. Optionally, the transceiver module is configured to perform at least one of the communication steps, such as transmission and/or reception, performed by the terminal 101 (such as step S2101, step S2103, but not limited to this) in any of the above methods, which is not repeated here. Optionally, the processing module is configured to perform at least one of other steps performed by the terminal 101 (such as step S2102, but not limited to this) in any of the above methods, which is not repeated here.

FIG. 6B is a block diagram of a network device 6200 provided by an embodiment of the present disclosure. As illustrated in FIG 6B, the network device 6200 may include at least one of a transceiver module 6201 and a processing module 6202. In some embodiments, the transceiver module is configured to transmit network configuration information and/or first indication information to a terminal device, the network configuration information and/or the first indication information being used for the terminal device to select a channel state information (CSI) generation part model and used for the network device to select a CSI recovery part model; or the transceiver module is configured to receive second indication information from the terminal device, the second indication information being used for the network device to select a CSI recovery part model. Optionally, the transceiver module is configured to perform at least one of the communication steps, such as transmission and/or reception, performed by the network device 102 (such as step S2101, step S2103, but not limited to this) in any of the above methods, which is not repeated here. Optionally, the processing module is configured to perform at least one of other steps performed by the network device (such as step S2104, but not limited to this) in any of the above methods, which is not repeated here.

In some embodiments, the transceiver module may include a transmitter and/or a receiver, which may be separate or integrated together. Optionally, the transceiver module may be interchanged with the transceiver.

In some embodiments, the processing module may be one module or may include a plurality of submodules. Optionally, the plurality of submodules respectively perform all or part of the steps required to be performed by the processing module. Optionally, the processing module may be interchanged with the processor.

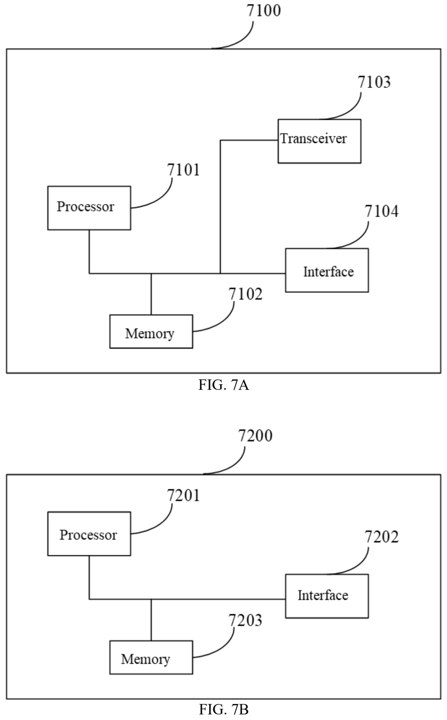

FIG. 7A is a block diagram of a communication device 7100 provided by an embodiment of the present disclosure. The communication device 7100 may be a network device (e.g., a access network device, a core network device), a terminal (e.g., a user equipment), a chip, a chip system, or a processor, etc. that supports the network device to realize the above-described method, or a chip, a chip system, or a processor, etc. that supports the terminal device to realize the above-described method. The communication device 7100 may be used to implement the methods described in the method embodiments described above, details of which may be found in the description of the method embodiments described above.

As illustrated in FIG. 7A, the communication device 7100 includes one or more processors 7101. The processor 7101 may be a general-purpose processor, a dedicated processor, or the like, and may be, for example, a baseband processor or a central processing unit. The baseband processor may be used to process the communication protocol as well as the communication data, and the central processor may be used to control the communication device (e.g., the base station, the baseband chip, the terminal device, the terminal device chip, the DU or the CU, etc.), execute the program, and process the data of the program. The communication device 7100 is configured to perform any of the above methods.

In some embodiments, the communication device 7100 further includes one or more memories 7102 for storing instructions. Optionally, all or part of the memory 7102 may also be outside the communication device 7100.

In some embodiments, the communication device 7100 further includes one or more transceivers 7103. In a case where the communication device 7100 includes one or more transceivers 7103, at least one of communication steps, such as transmission and/or reception in above methods (such as step S2101 and step S2103, but not limited to this) is performed by the transceiver 7103, and at least one of other steps (such as step S2104, but not limited to this) is performed by the processor 7101.

In some embodiments, the transceiver may include a receiver and/or a transmitter, which may be separate or integrated together. Optionally, terms such as a transceiver, a transceiver unit, a transceiving machine, and a transceiver circuit may be mutually replaced, terms such as a transmitter, a transmitter unit, a transceiving machine, and a transmitter circuit may be mutually replaced, and terms such as a receiver, a receiving unit, a receiving machine, and a receiving circuit may be mutually replaced.

In some embodiments, the communication device 7100 may include one or more interface circuits 7104. Optionally, the interface circuit 7104 is connected to the memory 7102, and the interface circuit 7104 may be used to receive signals from the memory 7102 or other devices, and may be used to transmit signals to the memory 7102 or other devices. For example, the interface circuit 7104 may read instructions stored in the memory 7102 and transmit the instructions to the processor 7101.

The communication device 7100 in the above description of embodiments may be a network device or a terminal device, but the scope of the communication device 7100 described in the present disclosure is not limited to this, and the structure of the communication device 7100 may not be limited by FIG. 7A. The communication device may be a stand-alone device or may be part of a larger device. For example, the communication device may be: 1) a stand-alone integrated circuit IC, or a chip, or a chip system or subsystem; (2) a set having one or more ICs, optionally, the set of ICs may also include storage components for storing data, programs; (3) an ASIC, such as a Modem; (4) modules that may be embedded in other devices; (5) receivers, terminal devices, intelligent terminal devices, cellular phones, wireless devices, handsets, mobile units, vehicle devices, network devices, cloud devices, artificial intelligence devices, etc.; (6) Others, etc.

FIG. 7B is a block diagram of a chip 7200 provided by an embodiment of the present disclosure. In a case where the communication device 7100 may be a chip or a chip system, reference may be made to the schematic structural diagram of the chip 7200 illustrated in FIG. 7B, which is not limited to this.

The chip 7200 includes one or more processors 7201, and the chip 7200 is configured to perform any of the above methods.

In some embodiments, the chip 7200 further includes one or more interface circuits 7202. Optionally, the interface circuit 7202 is connected to the memory 7203, the interface circuit 7202 may be used to receive signals from the memory 7203 or other devices, and the interface circuit 7202 may be used to transmit signals to the memory 7203 or other devices. For example, the interface circuit 7202 may read instructions stored in the memory 7203 and transmit the instructions to the processor 7201.

In some embodiments, at least one of communication steps such as transmission and/or reception in above methods (such as step S2101 and step S2103, but not limited to this) is performed by the interface circuit 7202, and at least one of other steps (such as step S2104, but not limited to this) is performed by the processor 7201.

In some embodiments, terms such as interface circuit, interface, transceiver pin, transceiver, and the like may be interchanged with each other.

In some embodiments, the chip 7200 further includes one or more memories 7203 for storing instructions. Optionally, all or part of the memory 7203 may be outside the chip 7200.

The present disclosure also provides a storage medium having instructions stored thereon that, when the instructions are executed on the communication device 7100, cause the communication device 7100 to perform any of the above methods. Optionally, the storage medium is an electronic storage medium. Optionally, the storage medium is a computer-readable storage medium, but is not limited to this, and may be a storage medium readable by another device. Optionally, the storage medium may be a non-transitory storage medium, but is not limited to this, and may be a transitory storage medium.

The present disclosure also provides a program product that, when executed by the communication device 7100, causes the communication device 7100 to perform any of the above methods. Optionally, the program product is a computer program product.

The present disclosure also provides a computer program that, when run on a computer, causes the computer to perform any of the above methods.

## Claims

1. A model selection method, performed by a terminal device, comprising:

receiving network configuration information and/or first indication information from a network device, the network configuration information and/or the first indication information being used for the terminal device to select a channel state information (CSI) generation part model; or transmitting second indication information to a network device, the second indication information being used for the network device to select a CSI recovery part model.

2. The method according to claim 1, wherein the network configuration information comprises at least one of:

a CSI feedback payload size, wherein the CSI feedback payload size is an output information length of the CSI generation part model;
a codebook type and/or a codebook parameter; or
a CSI reporting parameter.

3. The method according to claim 2, wherein:

the CSI feedback payload size has a correspondence with a rank of a selected CSI generation part model; or
the CSI feedback payload size has a correspondence with a transmission layer of a selected CSI generation part model; or
the CSI feedback payload size has a correspondence with a rank and a transmission layer of a selected CSI generation part model.

4. The method according to claim 2, wherein the CSI reporting parameter comprises at least one of:

a transmission bandwidth size;
a number of subbands;
a carrier; or
a number of antenna ports.

5. The method according to claim 1, wherein the first indication information comprises at least one of:

model indication information for the CSI generation part model;
model indication information for the CSI recovery part model;
indication information for an input data type of the CSI generation part model;
indication information for an output quantization approach of the CSI generation part model;
indication information for a training approach of the CSI generation part model; or
indication information for a training approach of the CSI recovery part model.

6. The method according to claim 5, further comprising:
transmitting model indication information for a selected CSI generation part model to the network device, wherein the first indication information does not comprise the model indication information.

7. The method according to claim 1, wherein the second indication information comprises at least one of:

model indication information for the CSI generation part model;
model indication information for the CSI recovery part model;
indication information for a training approach for the CSI generation part model; or
indication information for a training approach of the CSI recovery part model.

8. The method according to claim 7, wherein the model indication information for the CSI generation part model is indicated by $\lceil \log_2^{N_1} \rceil$ bits, wherein $N_1$ is a number of CSI generation part models deployed by the terminal device; and/or

the model indication information for the CSI recovery part model is indicated by $\lceil \log_2^{N_2} \rceil$ bits, wherein $N_2$ is a number of CSI recovery part models deployed by the network device.

9. The method according to claim 7, wherein model indication information for an i-th transmission layer of the CSI generation part model is indicated by $\lceil \log_2^{Mi_1} \rceil$ bits, wherein $Mi_1$ is a number of CSI generation part models deployed by the terminal device on the i-th transmission layer; and/or

model indication information for an i-th transmission layer of the CSI recovery part model is indicated by $\lceil \log_2^{Mi_2} \rceil$ bits, wherein $Mi_2$ is a number of CSI recovery part models deployed by the network device on the i-th transmission layer;

wherein the training approach of the CSI generation part model and/or the training approach of the CSI recovery part model indicates that different CSI generation part models and different CSI recovery part models are trained for different transmission layers.

10. The method according to claim 7, wherein the indication information for the training approach of the CSI generation part model is indicated by $\lceil \log_2^{K_1} \rceil$ bits, wherein $K_1$ is a number of training approaches employed by the terminal device; and/or

the indication information for the training approach of the CSI recovery part model is indicated by $\lceil \log_2^{K_2} \rceil$ bits, wherein $K_2$ is a number of training approaches employed by the network device.

11. The method according to claim 7, wherein the model indication information for the CSI generation part model and/or the indication information for the training approach of the CSI generation part model is carried in at least one of:

CSI Part1;
CSI Part2; or
a radio resource control (RRC) message.

12. The method according to claim 7, wherein the second indication information comprises the indication information for the training approach of the CSI generation part model and/or the indication information for the training approach of the CSI recovery part model; and

the second indication information further comprises indication information that whether a CSI feedback payload size output by the CSI generation part model is variable.

13. A model selection method, performed by a network device, comprising:
transmitting network configuration information and/or first indication information to a terminal device, the network configuration information and/or the first indication information being used for the terminal device to select a channel state information (CSI) generation part model and used for the network device to select a CSI recovery part model; or
receiving second indication information from a terminal device, the second indication information being used for the network device to select a CSI recovery part model.

14. The method according to claim 13, wherein the network configuration information comprises at least one of:

a CSI feedback payload size, wherein the CSI feedback payload size is an output information length of the CSI generation part model;
a codebook type and/or a codebook parameter; or
a CSI reporting parameter.

15. The method according to claim 14, wherein:

the CSI feedback payload size has a correspondence with a rank of a selected CSI generation part model; or
the CSI feedback payload size has a correspondence with a transmission layer of a selected CSI generation part model; or
the CSI feedback payload size has a correspondence with a rank and a transmission layer of a selected CSI generation part model.

16. The method according to claim 14, wherein the CSI reporting parameter comprises at least one of:

a transmission bandwidth size;
a number of subbands;
a carrier; or

a number of antenna ports.

17. The method according to claim 13, wherein the first indication information comprises at least one of:

model indication information for the CSI generation part model;
model indication information for the CSI recovery part model;
indication information for an input data type of the CSI generation part model;
indication information for an output quantization approach of the CSI generation part model;
indication information for a training approach for the CSI generation part model; or
indication information for a training approach of the CSI recovery part model.

18. The method according to claim 17, further comprising:
receiving model indication information for a selected CSI generation part model from the terminal device, wherein the first indication information does not comprise the model indication information.

19. The method according to claim 13, wherein the second indication information comprises at least one of:

model indication information for the CSI generation part model;
model indication information for the CSI recovery part model;
indication information for a training approach of the CSI generation part model; or
indication information for a training approach of the CSI recovery part model.

20. The method according to claim 19, wherein the model indication information for the CSI generation part model is indicated by $\lceil \log_2^{N_1} \rceil$ bits, wherein $N_1$ is a number of CSI generation part models deployed by the terminal device; and/or

the model indication information for the CSI recovery part model is indicated by $\lceil \log_2^{N_2} \rceil$ bits, wherein $N_2$ is a number of CSI recovery part models deployed by the network device.

21. The method according to claim 19, wherein model indication information for an i-th transmission layer of the CSI generation part model is indicated by $\lceil \log_2^{Mi_1} \rceil$ bits, wherein $Mi_1$ is a number of CSI generation part models deployed by the terminal device on the i-th transmission layer; and/or

model indication information for an i-th transmission layer of the CSI recovery part model is indicated by $\lceil \log_2^{Mi_2} \rceil$ bits, wherein $Mi_2$ is a number of CSI recovery part models deployed by the network device on the i-th transmission layer;
wherein the training approach of the CSI generation part model and/or the training approach of the CSI recovery part model indicates that different CSI generation part models and different CSI recovery part models are trained for different transmission layers.

22. The method according to claim 19, wherein the indication information for the training approach of the CSI generation part model is indicated by $\lceil \log_2^{K_1} \rceil$ bits, wherein $K_1$ is a number of training approaches employed by the terminal device; and/or

the indication information for the training approach of the CSI recovery part model is indicated by $\lceil \log_2^{K_2} \rceil$ bits, wherein $K_2$ is a number of training approaches employed by the network device.

23. The method according to claim 19, wherein the model indication information for the CSI generation part model and/or the indication information for the training approach of the CSI generation part model is carried in at least one of:

CSI Part1;
CSI Part2; or
a radio resource control (RRC) message.

24. The method according to claim 19, wherein the second indication information comprises the indication information for the training approach of the CSI generation part model and/or the indication information for the training approach of the CSI recovery part model; and

the second indication information further comprises indication information that whether a CSI feedback payload size output by the CSI generation part model is variable.

25. A model selection method, comprising:

receiving, by a terminal device, network configuration information and/or first indication information from a network device, the network configuration information and/or the first indication information being used for the terminal device to select a channel state information (CSI) generation part model; or transmitting, by a terminal device, second indication information to a network device, the second indication information being used for the network device to select a CSI recovery part model.

26. A model selection apparatus, comprising:

a transceiver module configured to receive network configuration information and/or first indication information from a network device, the network configuration information and/or the first indication information being used for a terminal device to select a channel state information (CSI) generation part model; or configured to transmit second indication information to a network device, the second indication information being used for the network device to select a CSI recovery part model.

27. A model selection apparatus, comprising:

a transceiver module configured to transmit network configuration information and/or first indication information to a terminal device, the network configuration information and/or the first indication information being used for the terminal device to select a channel state information (CSI) generation part model and used for a network device to select a CSI recovery part model; or configured to receive second indication information from a terminal device, the second indication information being used for a network device to select a CSI recovery part model.

28. A terminal device, comprising:

one or more processors,
wherein the one or more processors are configured to invoke instructions to cause the terminal device to perform the model selection method according to any one of claims 1 to 12.

29. A network device, comprising:

one or more processors,
wherein the one or more processors are configured to invoke instructions to cause the network device to perform the model selection method according to any one of claims 13 to 24.

30. A communication system, comprising:

a terminal device configured to implement the model selection method according to any one of claims 1 to 12, and a network device configured to implement the model selection method according to any one of claims 13 to 24.

31. A storage medium storing instructions that, when executed by a communication device, cause the communication device to perform the model selection method according to any one of claims 1 to 12 or 13 to 24.

Communication system 100

Terminal
101

Network
102

FIG. 1A

UE

downlink channel

$H$

CSI generation part
model

Binary bit stream $s$

gNB

CSI recovery part
model

Rescovered
downlink
channel $\check{H}$

FIG. 1B

Terminal
101

Network device
102

Step S2101: the network device 102 transmits network
configuration information and/or first indication
information to the terminal 101

Step S2102: the terminal 101 selects the
CSI generation part model according to the
network configuration information and/or
the first indication information

Step S2103: the terminal 101 transmits the second
indication information to the network device 102

Step S2104: the network device
102 selects the CSI recovery part
model according to the network
configuration information and/or
the second indication information

FIG. 2

| | |
|---|---|
| Obtaining network configuration information and/or first indication information | S3101 |

↓

| | |
|---|---|
| Selecting the CSI generation part model according to the network configuration information and/or the first indication information | S3102 |

↓

| | |
|---|---|
| Transmitting the second indication information | S3103 |

FIG. 3A

| | |
|---|---|
| Receiving network configuration information and/or first indication information from a network device, the network configuration information and/or the first indication information being used for the terminal device to select a CSI generation part model | S3201 |

↓

| | |
|---|---|
| Selecting the CSI generation part model according to the network configuration information and/or the first indication information | S3202 |

FIG. 3B

| | |
|---|---|
| Transmitting second indication information to the network device, and the second indication information is used for the network device to select the CSI recovery part model | S3301 |

FIG. 3C

| | |
|---|---|
| Transmitting network configuration information and/or the first indication information | S4101 |

↓

| | |
|---|---|
| Obtaining the second indication information | S4102 |

↓

| | |
|---|---|
| Selecting the CSI recovery part model according to the network configuration information and/or the second indication information | S4103 |

FIG. 4A

| | |
|---|---|
| Transmitting network configuration information and/or first indication information to a terminal device, the network configuration information and/or the first indication information being used for the terminal device to select a CSI generation part model, and being used for the network device to select the CSI recovery part model | S4201 |

FIG. 4B

Receiving second indication information from a terminal device, and the second indication information is used for the network device to select the CSI recovery part model — S4301

Selecting the CSI recovery part model according to the network configuration information and/or the second indication information — S4302

FIG. 4C

Receiving network configuration information and/or first indication information from a network device, the network configuration information and/or the first indication information being used for the terminal device to select a CSI generation part model; or transmitting second indication information to the network device, the second indication information being used for the network device to select a CSI recovery part model — S5101

FIG. 5A

Transmitting network configuration information and/or first indication information to a terminal device, the network configuration information and/or the first indication information being used for the terminal device to select a CSI generation part model and used for the network device to select a CSI recovery part model; or receiving second indication information from the terminal device, the second indication information being used for the network device to select a CSI recovery part model — S5201

FIG. 5B

Terminal 6100

Transceiver module 6101

Processing module 6102

FIG. 6A

Network device 6200

Transceiver module 6201

Processing module 6202

FIG. 6B

7100

FIG. 7A

7200

FIG. 7B

## INTERNATIONAL SEARCH REPORT

| International application No. |
|---|
| **PCT/CN2023/106668** |

**A.    CLASSIFICATION OF SUBJECT MATTER**

H04L 41/16(2022.01)i

According to International Patent Classification (IPC) or to both national classification and IPC

**B.    FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

DWPI, ENTXT, CNKI, CNTXT: 配置, 指示, 信道状态信息, 模型, 压缩, 解压缩, 层, 模式, configuration, indication, CSI, model, compression, decompression, layer, mode

**C.    DOCUMENTS CONSIDERED TO BE RELEVANT**

| Category* | Citation of document, with indication, where appropriate, of the relevant passages | Relevant to claim No. |
|---|---|---|
| X | WO 2023102045 A1 (INTERDIGITAL PATENT HOLDINGS, INC.) 08 June 2023 (2023-06-08) description, paragraph [0004] | 1-31 |
| X | CN 115443643 A (BEIJING XIAOMI MOBILE SOFTWARE CO., LTD.) 06 December 2022 (2022-12-06) description, paragraphs [0251]-[0281] | 1-31 |
| A | CN 114143799 A (HUAWEI TECHNOLOGIES CO., LTD.) 04 March 2022 (2022-03-04) entire document | 1-31 |
| A | WO 2023029338 A1 (CHINA ACADEMY OF INFORMATION AND COMMUNICATIONS) 09 March 2023 (2023-03-09) entire document | 1-31 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 September 2023** | **21 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/106668**

| Patent document cited in search report | | | Publication date (day/month/year) | Patent family member(s) | | | Publication date (day/month/year) |
|---|---|---|---|---|---|---|---|
| WO | 2023102045 | A1 | 08 June 2023 | None | | | |
| CN | 115443643 | A | 06 December 2022 | None | | | |
| CN | 114143799 | A | 04 March 2022 | None | | | |
| WO | 2023029338 | A1 | 09 March 2023 | CN | 113922936 | A | 11 January 2022 |

Form PCT/ISA/210 (patent family annex) (July 2022)